(19) Europäisches Patentamt / European Patent Office / Office européen des brevets

(11) **EP 4 097 917 B1**

(12) **EUROPEAN PATENT SPECIFICATION**

(45) Date of publication and mention of the grant of the patent:
**25.03.2026 Bulletin 2026/13**

(21) Application number: **21703311.7**

(22) Date of filing: **19.01.2021**

(51) International Patent Classification (IPC):
*H04L 9/32* (2006.01)   *H04L 67/1097* (2022.01)
*H04L 67/10* (2022.01)   *H04L 9/00* (2022.01)

(52) Cooperative Patent Classification (CPC):
**H04L 9/3236; H04L 9/3247; H04L 9/3297;
H04L 9/50; H04L 67/10; H04L 67/1097;**
H04L 2209/56

(86) International application number:
**PCT/IB2021/050365**

(87) International publication number:
**WO 2021/165756 (26.08.2021 Gazette 2021/34)**

(54) **DISTRIBUTED DATABASE**

VERTEILTE DATENBANK

BASE DE DONNÉES DISTRIBUÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2020 GB 202002303**

(43) Date of publication of application:
**07.12.2022 Bulletin 2022/49**

(60) Divisional application:
**26156216.9 / 4 716 145**

(73) Proprietor: **nChain Licensing AG
6300 Zug (CH)**

(72) Inventors:
• **WRIGHT, Craig Steven
London W1W 8AP (GB)**
• **DAVIES, Jack Owen
London W1W 8AP (GB)**

(74) Representative: **Page White Farrer
Bedford House
21a John Street
London WC1N 2BF (GB)**

(56) References cited:
**US-A1- 2009 089 313    US-A1- 2020 004 737**

• **ANIELLO LEONARDO ET AL: "A Prototype
Evaluation of a Tamper-Resistant High
Performance Blockchain-Based Transaction Log
for a Distributed Database", 2017 13TH
EUROPEAN DEPENDABLE COMPUTING
CONFERENCE (EDCC), IEEE, 4 September 2017
(2017-09-04), pages 151 - 154, XP033273647, DOI:
10.1109/EDCC.2017.31**
• **GARCIA-MOLINA H ET AL: "RELIABLE
DISTRIBUTED DATABASE MANAGEMENT",
PROCEEDINGS OF THE IEEE, IEEE. NEW YORK,
US, vol. 75, no. 5, 1 May 1987 (1987-05-01), pages
601 - 620, XP000050672, ISSN: 0018-9219**

**EP 4 097 917 B1**

**Description**

<u>TECHNICAL FIELD</u>

The present disclosure relates to a distributed database implemented in conjunction with a blockchain for recording changes in state to the database.

<u>BACKGROUND</u>

A blockchain refers to a form of distributed data structure, wherein a duplicate copy of the blockchain is maintained at each of a plurality of nodes in a peer-to-peer (P2P) network. The blockchain comprises a chain of blocks of data, wherein each block comprises one or more transactions. Each transaction may point back to a preceding transaction in a sequence which may span one or more blocks. Transactions can be submitted to the network to be included in new blocks. New blocks are created by a process known as "mining", which involves each of a plurality of mining nodes competing to perform "proof-of-work", i.e. solving a cryptographic puzzle based on a pool of the pending transactions waiting to be included in blocks.

Each node in the network can have any one, two or all of three roles: forwarding, mining and storage. Forwarding nodes propagate transactions throughout the nodes of the network. Mining nodes perform the mining of transactions into blocks. Storage nodes each store their own copy of the mined blocks of the blockchain. In order to have a transaction recorded in the blockchain, a party sends the transaction to one of the nodes of the network to be propagated. Mining nodes which receive the transaction may race to mine the transaction into a new block. Each node is configured to respect the same node protocol, which will include one or more conditions for a transaction to be valid. Invalid transactions will not be propagated nor mined into blocks. Assuming the transaction is validated and thereby accepted onto the blockchain, then the transaction (including any user data) will thus remain stored at each of the nodes in the P2P network as an immutable public record.

The miner who successfully solved the proof-of-work puzzle to create the latest block is typically rewarded with a new transaction called a "generation transaction" which generates a new amount of the digital asset. The proof-of work incentivises miners not to cheat the system by including double-spending transactions in their blocks, since it requires a large amount of compute resource to mine a block, and a block that includes an attempt to double spend is likely not be accepted by other nodes.

In an "output-based" model (sometimes referred to as a UTXO-based model), the data structure of a given transaction comprises one or more inputs and one or more outputs. Any spendable output comprises an element specifying an amount of the digital asset, sometimes referred to as a UTXO ("unspent transaction output"). The output may further comprise a locking script specifying a condition for redeeming the output. Each input comprises a pointer to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the P2P network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it nor include it for mining into a block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the miners separate to the blockchain and is updated constantly.

Conventionally the transactions in the blockchain are used to convey a digital asset, i.e. a number of digital tokens. However, a blockchain can also be exploited in order to superimpose additional functionality on top of the blockchain. For instance, blockchain protocols may allow for storage of additional user data in an output of a transaction. Modern blockchains are increasing the maximum data capacity that can be stored within a single transaction, enabling more complex data to be incorporated. For instance this may be used to store an electronic document in the blockchain, or even audio or video data.

Aniello et al "A Prototype Evaluation of a Tamper-resistant High Performance Blockchain-based Transaction Log for a Distributed Database" discloses a layered blockchain-based architecture for distributed (federated) database redo logs, comprising a fast first layer blockchain anchored to a secure second layer blockchain, based on proof-of-work to achieve strong integrity.

US2020/004737A1 discloses techniques for invoking a smart contract.

Garcia-Molina et al "Reliable distributed Database Management" discloses three scenarios for reliable nonpartitionable networks.

US 2009/089313 discloses a technique that reduces the complexity and resource consumption associated with performing record expiry in a distributed database system. A record is checked to see if it has expired only when it has been accessed for a read or a write. If at the time of a read a record is determined to have expired, then it is not served. If at the time of a write a record is determined to have expired, then the write is treated as an insertion of a new record, and steps are taken to treat the insertion consistently with regard to the previous expired version. A background process is used to delete records that have not been written to or actively deleted by a client after expiration.

## SUMMARY

The present disclosure provides a scheme whereby a distributed database is implemented across multiple nodes of a layered network with nodes of a blockchain network at its core, and whereby changes in state to the database are recorded on a blockchain of the blockchain network.

According to one aspect disclosed herein, there is provided a method according to claim 1. According to another aspect there is provided computer equipment according to claim 12.

## BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3 is a schematic representation of an example of a layered network,

Figure 4 is another schematic representation of an example of a layered network,

Figure 5 is another schematic representation of an example of a layered,

Figure 6 is another schematic representation of an example of a layered network,

Figure 7 schematically illustrates an example attestation service implemented in a layered network,

Figure 8 is a schematic transaction diagram of an example transaction for recording an order of data items on a blockchain,

Figure 9 schematically illustrates an example indexed list for recording an order of a set of data items within a transaction,

Figure 10 schematically illustrates another example of an indexed list for recording an order of a set of data items within a transaction,

Figure 11 schematically illustrates another example of an indexed list for recording an order of a set of data items within a transaction,

Figure 12 schematically illustrates an example of a distributed database implemented in a layered network,

Figure 13 schematically illustrates an example of the architecture of a Cassandra database cluster by way of comparison,

Figure 14 schematically illustrates the different communication pathways of a Cassandra cluster graph,

Figure 15 is a schematic block diagram of the high-level architecture of a single Cassandra node during a write request,

Figure 16 schematically illustrates a transition from a complete network cluster (left hand side) to a blockchain layered network (right hand side),

Figure 17 schematically illustrates a blockchain layered network (BLN) including a cluster of distributed database nodes and users of a system underpinned by the database,

Figure 18 schematically illustrates an example of a BLN implemented distributed database with PKI implemented in at least layers $i$ = 2,3,

Figure 19 schematically illustrates an example of a read/write transaction for recording an indication of a database update on a blockchain,

Figure 20 schematically illustrates a read/write path in an example architecture of a BLN implemented distributed database (BLNiDD), and

Figure 21 schematically illustrates an example of a hinted handoff transaction.

<u>DETAILED DESCRIPTION OF EMBODIMENTS</u>

EXAMPLE SYSTEM OVERVIEW

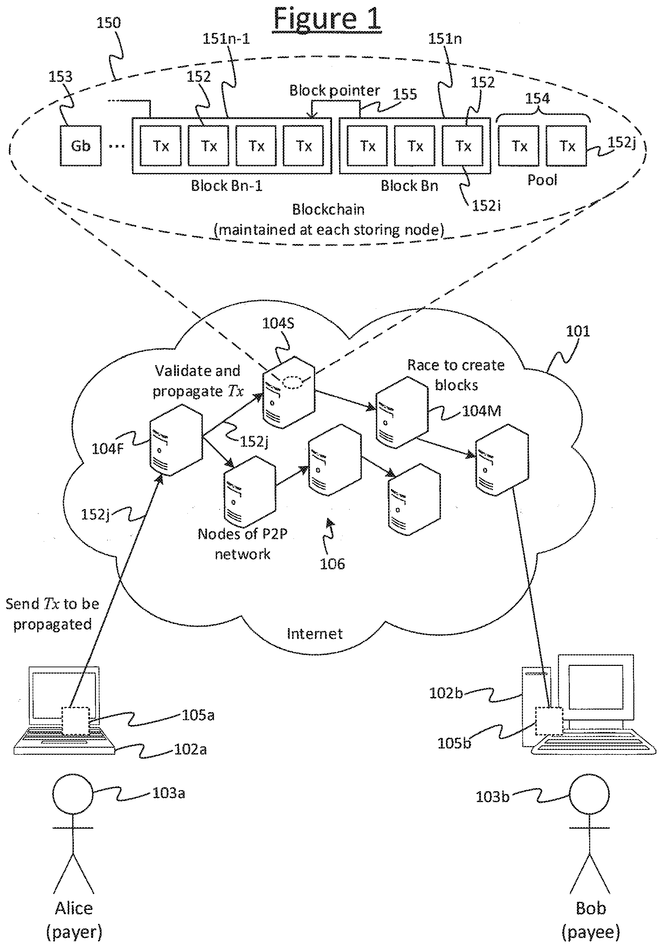

Figure 1 shows an example system 100 for implementing a blockchain 150. The system 100 comprises a packet-switched network 101, typically a wide-area internetwork such as the Internet. The packet-switched network 101 comprises a plurality of nodes 104 arranged to form a peer-to-peer (P2P) overlay network 106 within the packet-switched network 101. Each node 104 of the blockchain network 106 comprises computer equipment of a peers, with different ones of the nodes 104 belonging to different peers. Each node 104 comprises processing apparatus comprising one or more processors, e.g. one or more central processing units (CPUs), accelerator processors, application specific processors and/or field programmable gate arrays (FPGAs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of nodes in the P2P network 160. Each block 151 in the chain comprises one or more transactions 152, wherein a transaction in this context refers to a kind of data structure. The nature of the data structure will depend on the type of transaction protocol used as part of a transaction model or scheme. A given blockchain will typically use one particular transaction protocol throughout. In one common type of transaction protocol, the data structure of each transaction 152 comprises at least one input and at least one output. Each output specifies an amount representing a quantity of a digital asset belonging to a user 103 to whom the output is cryptographically locked (requiring a signature of that user in order to be unlocked and thereby redeemed or spent). Each input points back to the output of a preceding transaction 152, thereby linking the transactions.

At least some of the nodes 104 take on the role of forwarding nodes 104F which forward and thereby propagate transactions 152. At least some of the nodes 104 take on the role of miners 104M which mine blocks 151. At least some of the nodes 104 take on the role of storage nodes 104S (sometimes also called "full-copy" nodes), each of which stores a respective copy of the same blockchain 150 in their respective memory. Each miner node 104M also maintains a pool 154 of transactions 152 waiting to be mined into blocks 151. A given node 104 may be a forwarding node 104, miner 104M, storage node 104S or any combination of two or all of these.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the pool 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the signature of the user 103a to whom the output of the preceding transaction 152i is locked. In turn, the output of the present transaction 152j can be cryptographically locked to a new user 103b. The present transaction 152j can thus transfer the amount defined in the input of the preceding transaction 152i to the new user 103b as defined in the output of the present transaction 152j. In some cases a transaction 152 may have multiple outputs to split the input amount between multiple users (one of whom could be the original user 103a in order to give change). In some cases a transaction can also have multiple inputs to gather together the amounts from multiple outputs of one or more preceding transactions, and redistribute to one or more outputs of the current transaction.

The above may be referred to as an "output-based" transaction protocol, sometimes also referred to as an unspent transaction output (UTXO) type protocol (where the outputs are referred to as UTXOs). A user's total balance is not defined in any one number stored in the blockchain, and instead the user needs a special "wallet" application 105 to collate the values of all the UTXOs of that user which are scattered throughout many different transactions 152 in the blockchain 151.

An alternative type of transaction protocol may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored by the miners separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

In either type of model, when a user 103 wishes to enact a new transaction 152j, then he/she sends the new transaction from his/her computer terminal 102 to one of the nodes 104 of the P2P validation network 106 (which nowadays are typically servers or data centres, but could in principle be other user terminals). This node 104 checks whether the transaction is valid according to a node protocol which is applied at each of the nodes 104. The details of the node protocol will correspond to the type of transaction protocol being used in the blockchain 150 in question, together forming the overall transaction model. The node protocol typically requires the node 104 to check that the cryptographic signature in the new transaction 152j matches the expected signature, which depends on the previous transaction 152i in an ordered sequence of transactions 152. In an output-based case, this may comprise checking that the cryptographic signature of the user included in the input of the new transaction 152j matches a condition defined in the output of the preceding transaction 152i which the new transaction spends, wherein this condition typically comprises at least checking that the cryptographic signature in the input of the new transaction 152j unlocks the output of the previous transaction 152i to which the input of the new transaction points. In some transaction protocols the condition may be at least partially defined by a custom script included in the input and/or output. Alternatively it could simply be a fixed by the node protocol alone, or it could be due to a combination of these. Either way, if the new transaction 152j is valid, the current node forwards it to one or more others of the nodes 104 in the P2P network 106. At least some of these nodes 104 also act as forwarding nodes 104F, applying the same test according to the same node protocol, and so forward the new transaction 152j on to one or more further nodes 104, and so forth. In this way the new transaction is propagated throughout the network of nodes 104.

In an output-based model, the definition of whether a given output (e.g. UTXO) is spent is whether it has yet been validly redeemed by the input of another, onward transaction 152j according to the node protocol. Another condition for a transaction to be valid is that the output of the preceding transaction 152i which it attempts to spend or redeem has not already been spent/redeemed by another valid transaction. Again if not valid, the transaction 152j will not be propagated or recorded in the blockchain. This guards against double-spending whereby the spender tries to spend the output of the same transaction more than once.

In addition to validation, at least some of the nodes 104M also race to be the first to create blocks of transactions in a process known as mining, which is underpinned by "proof of work". At a mining node 104M, new transactions are added to a pool of valid transactions that have not yet appeared in a block. The miners then race to assemble a new valid block 151 of transactions 152 from the pool of transactions 154 by attempting to solve a cryptographic puzzle. Typically this comprises searching for a "nonce" value such that when the nonce is concatenated with the pool of transactions 154 and hashed, then the output of the hash meets a predetermined condition. E.g. the predetermined condition may be that the output of the hash has a certain predefined number of leading zeros. A property of a hash function is that it has an unpredictable output with respect to its input. Therefore this search can only be performed by brute force, thus consuming a substantive amount of processing resource at each node 104M that is trying to solve the puzzle.

The first miner node 104M to solve the puzzle announces this to the network 106, providing the solution as proof which can then be easily checked by the other nodes 104 in the network (once given the solution to a hash it is straightforward to check that it causes the output of the hash to meet the condition). The pool of transactions 154 for which the winner solved the puzzle then becomes recorded as a new block 151 in the blockchain 150 by at least some of the nodes 104 acting as storage nodes 104S, based on having checked the winner's announced solution at each such node. A block pointer 155 is also assigned to the new block 151n pointing back to the previously created block 151n-1 in the chain. The proof-of-work helps reduce the risk of double spending since it takes a large amount of effort to create a new block 151, and as any block containing a double spend is likely to be rejected by other nodes 104, mining nodes 104M are incentivised not to allow double spends to be included in their blocks. Once created, the block 151 cannot be modified since it is recognized and maintained at each of the storing nodes 104S in the P2P network 106 according to the same protocol. The block pointer 155 also imposes a sequential order to the blocks 151. Since the transactions 152 are recorded in the ordered blocks at each storage node 104S in a P2P network 106, this therefore provides an immutable public ledger of the transactions.

The pool 154 is sometimes referred to as a "mempool". This term herein is not intended to limit to any particular blockchain, protocol or model. It refers to the pool of transactions which a miner has accepted for mining and for which the miner has committed not to accept any other transactions attempting to spend the same output.

Note that different miners 104M racing to solve the puzzle at any given time may be doing so based on different snapshots of the unmined transaction pool 154 at any given time, depending on when they started searching for a solution. Whoever solves their respective puzzle first defines which transactions 152 are included in the next new block 151n, and the current pool 154 of unmined transactions is updated. The miners 104M then continue to race to create a block from the newly defined outstanding pool 154, and so forth. A protocol also exists for resolving any "fork" that may arise, which is where two miners 104M solve their puzzle within a very short time of one another such that a conflicting view of the blockchain gets propagated. In short, whichever prong of the fork grows the longest becomes the definitive blockchain 150.

In most blockchains the winning miner 104M is automatically rewarded with a special kind of new transaction which creates a new quantity of the digital asset out of nowhere (as opposed to normal transactions which transfer an amount of the digital asset from one user to another). Hence the winning node is said to have "mined" a quantity of the digital asset. This special type of transaction is sometime referred to as a "generation" transaction. It automatically forms part of the new block 151n. This reward gives an incentive for the miners 104M to participate in the proof-of-work race. Often a regular (non-generation) transaction 152 will also specify an additional transaction fee in one of its outputs, to further reward the winning miner 104M that created the block 151n in which that transaction was included.

Due to the computational resource involved in mining, typically at least each of the miner nodes 104M takes the form of a server comprising one or more physical server units, or even whole a data centre. Each forwarding node 104M and/or storage node 104S may also take the form of a server or data centre. However in principle any given node 104 could take the form of a user terminal or a group of user terminals networked together.

The memory of each node 104 stores software configured to run on the processing apparatus of the node 104 in order to perform its respective role or roles and handle transactions 152 in accordance with the node protocol. It will be understood that any action attributed herein to a node 104 may be performed by the software run on the processing apparatus of the respective computer equipment. The node software may be implemented in one or more applications at the application layer, or a lower layer such as the operating system layer or a protocol layer, or any combination of these. Also, the term "blockchain" as used herein is a generic term that refers to the kind of technology in general, and does not limit to any particular proprietary blockchain, protocol or service.

Also connected to the network 101 is the computer equipment 102 of each of a plurality of parties 103 in the role of consuming users. These act as payers and payees in transactions but do not necessarily participate in mining or propagating transactions on behalf of other parties. They do not necessarily run the mining protocol. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective user party 103 to create, sign and send transactions 152 to be propagated throughout the network of nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the forwarding nodes 104F of the P2P network 106. This enables the wallet function of the client 105 to send transactions 152 to the network 106. The client 105 is also able to contact one, some or all of the storage nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. Each node 104 runs software configured to validate transactions 152 according to a node protocol, and in the case of the forwarding nodes 104F to forward transactions 152 in order to propagate them throughout the network 106. The transaction protocol and node protocol correspond to one another, and a given transaction protocol goes with a given node protocol, together implementing a given transaction model. The same transaction protocol is used for all transactions 152 in the blockchain 150 (though the transaction protocol may allow different subtypes of transaction within it). The same node protocol is used by all the nodes 104 in the network 106 (though it many handle different subtypes of transaction differently in accordance with the rules defined for that subtype, and also different nodes may take on different roles and hence implement different corresponding aspects of the protocol).

As mentioned, the blockchain 150 comprises a chain of blocks 151, wherein each block 151 comprises a set of one or more transactions 152 that have been created by a proof-of-work process as discussed previously. Each block 151 also comprises a block pointer 155 pointing back to the previously created block 151 in the chain so as to define a sequential order to the blocks 151. The blockchain 150 also comprises a pool of valid transactions 154 waiting to be included in a new block by the proof-of-work process. Each transaction 152 (other than a generation transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one of the one or more forwarding nodes 104F to which she is connected. E.g. this could be the forwarding node 104F that is nearest or best connected to Alice's computer 102. When any given node 104 receives a new transaction 152j, it handles it in accordance with the node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any storage node 104S that receives the transaction 152j will add the new validated transaction 152 to the pool 154 in the copy of the blockchain 150 maintained at that node 104S. Further, any forwarding node 104F that receives the transaction 152j will propagate the validated transaction 152 onward to one or more other nodes 104 in the P2P network 106. Since each forwarding node 104F applies the same protocol, then assuming the transaction 152j is valid, this means it will soon be propagated throughout the whole P2P network 106.

Once admitted to the pool 154 in the copy of the blockchain 150 maintained at one or more storage nodes 104, then miner nodes 104M will start competing to solve the proof-of-work puzzle on the latest version of the pool 154 including the new transaction 152 (other miners 104M may still be trying to solve the puzzle based on the old view of the pool 154, but whoever gets there first will define where the next new block 151 ends and the new pool 154 starts, and eventually someone will solve the puzzle for a part of the pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Mining and storage nodes may both perform validation as a function. For mining nodes that function may be auxiliary to the hashing and for storage nodes that function may be auxiliary to the storing.

Different nodes 104 may receive different instances of a given transaction first and therefore have conflicting views of which instance is 'valid' before one instance is mined into a block 151, at which point all nodes 104 agree that the mined instance is the only valid instance. If a node 104 accepts one instance as valid, and then discovers that a second instance has been recorded in the blockchain 150 then that node 104 must accept this and will discard (i.e. treat as invalid) the unmined instance which it had initially accepted.

UTXO-BASED MODEL

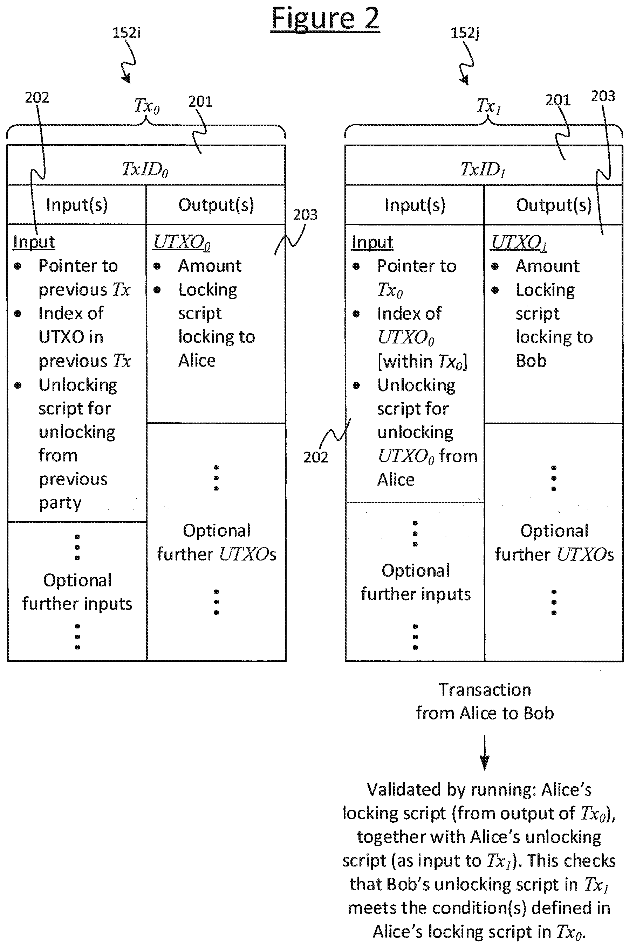

Figure 2 illustrates an example transaction protocol. This is an example of an UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this not limiting to all possible embodiments.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the (distributed) ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the miners 104M.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just an arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in the blockchain 150 at the time when Alice creates her new transaction $Tx_1$, or at least by the time she sends it to the network 106. It may already have been included in one of the blocks 151 at that time, or it may be still waiting in the pool 154 in which case it will soon be included in a new block 151. Alternatively $Tx_0$ and $Tx_1$ could be created and sent to the network 102 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given node 104. Nevertheless, a subsequent transaction (the descendent transaction or "child") which points to a preceding transaction (the antecedent transaction or "parent") will not be validated until and unless the parent transaction is validated. A child that arrives at a node 104 before its parent is considered an orphan. It may be discarded or buffered for a certain time to wait for the parent, depending on the node protocol and/or miner behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S). The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ comprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). What data (or "message") needs to be signed by Alice to provide a valid signature may be defined by the locking script, or by the node protocol, or by a combination of these.

Depending on implementation, the signature required may for example be a conventional ECDSA (elliptic curve digital signature algorithm) signature, DSA (Digital Signature Algorithm) signature or RSA (Rivest-Shamir-Adleman) signature, or any other suitable form of cryptographic signature. The challenge for the signature may for example be implemented as a standard pay-to-public key (P2PK) puzzle or P2PK hash (P2PKH) puzzle, or an alternative such as an R-puzzle may instead be implemented as a means to a signature. The present example uses P2PK by way of illustration.

When the new transaction $Tx_1$ arrives at a node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> <$P_A$> | | [Checksig $P_A$]

where "||" represents a concatenation and "<...>" means place the data on the stack, and "[...]" is a function comprised by the unlocking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the locking script in the input of $Tx_1$ contains the signature of Alice signing the expected portion of data. The expected portion of data itself (the "message") also needs to be included in $Tx_0$ order to perform this authentication. In embodiments the signed data comprises the whole of $Tx_0$ (so a separate element does to need to be included specifying the signed portion of data in the clear, as it is already inherently present).

The details of authentication by public-private cryptography will be familiar to a person skilled in the art. Basically, if Alice has signed a message by encrypting it with her private key, then given Alice's public key and the message in the clear (the unencrypted message), another entity such as a node 104 is able to authenticate that the encrypted version of the message must have been signed by Alice. Signing typically comprises hashing the message, signing the hash, and tagging this onto the clear version of the message as a signature, thus enabling any holder of the public key to authenticate the signature. Note therefore that any reference herein to signing a particular piece of data or part of a transaction, or such like, can in embodiments mean signing a hash of that piece of data or part of the transaction.

A hash referred to anywhere herein may refer for example be implemented by a SHA (Secure Hash Algorithm) hash function, or HMAC (hash-based message authentication code) hash function, or any other suitable form of cryptographic hash function known in the art.

If the unlocking script in $Tx_1$ meets the one or more conditions specified in the locking script of $Tx_0$ (so in the example shown, if Alice's signature is provided in $Tx_1$ and authenticated), then the node 104 deems $Tx_1$ valid. If it is a mining node 104M, this means it will add it to the pool of transactions 154 awaiting proof-of-work. If it is a forwarding node 104F, it will forward the transaction $Tx_1$ to one or more other nodes 104 in the network 106, so that it will be propagated throughout the network. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the node 104 also needs to check whether the referenced UTXO in the preceding transaction $Tx_0$ is already spent (has already formed a valid input to another valid transaction). This is one reason why it is important for the blockchain 150 to impose a defined order on the transactions 152. In practice a given node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor mined into blocks 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the winning miner, because nowadays the reward of the generation transaction alone is not typically sufficient to motivate mining. If Alice does not include a fee for the miner, $Tx_0$ will likely be rejected by the miner nodes 104M, and hence although technically valid, it will still not be propagated and included in the blockchain 150 (the miner protocol does not force miners 104M to accept transactions 152 if they don't want). In some protocols, the mining fee does not require its own separate output 203 (i.e. does not need a separate UTXO). Instead any difference between the total amount pointed to by the input(s) 202 and the total amount of specified in the output(s) 203 of a given transaction 152 is automatically given to the winning miner 104. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference automatically goes to the winning miner 104M. Alternatively or additionally however, it is not necessarily excluded that a miner fee could be specified explicitly in its own one of the UTXOs 203 of the transaction 152.

Alice and Bob's digital assets consist of the unspent UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the storage nodes 104S, e.g. the storage node 104S that is closest or best connected to the respective party's computer equipment 102.

Note that the script code is often represented schematically (i.e. not the exact language). For example, one may write [Checksig $P_A$] to mean [Checksig $P_A$] = OP_DUP OP_HASH160 <H($P_A$)> OP_EQUALVERIFY OP_CHECKSIG. "OP_..." refers to a particular opcode of the Script language. OP_CHECKSIG (also called "Checksig") is a Script opcode that takes two inputs (signature and public key) and verifies the signature's validity using the Elliptic Curve Digital Signature Algorithm (ECDSA). At runtime, any occurrences of signature ('sig') are removed from the script but additional requirements, such as a hash puzzle, remain in the transaction verified by the 'sig' input. As another example, OP_RETURN is an opcode of the Script language for creating an unspendable output of a transaction that can store metadata within the transaction, and thereby record the metadata immutably in the blockchain 150. E.g. the metadata could comprise a document which it is desired to store in the blockchain.

The signature $P_A$ is a digital signature. In embodiments this is based on the ECDSA using the elliptic curve secp256k1. A digital signature signs a particular piece of data. In embodiments, for a given transaction the signature will sign part of the transaction input, and all or part of the transaction output. The particular parts of the outputs it signs depends on the SIGHASH flag. The SIGHASH flag is a 4-byte code included at the end of a signature to select which outputs are signed (and thus fixed at the time of signing).

The locking script is sometimes called "scriptPubKey" referring to the fact that it comprises the public key of the party to whom the respective transaction is locked. The unlocking script is sometimes called "scriptSig" referring to the fact that it supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

LAYERED NETWORK

**Layered Network Structure:** a layered network is an overlay network layered on top of a communication channel. For instance, the communication channel may be an underlying infrastructure network such as a personal area network, a local area network (e.g. an inter-company P2P network) or a wide area network such as the internet. In other examples, the layered network may be a network of nodes connected via wired connections. In yet other examples, the connections may be wireless connections, e.g. Bluetooth or Wi-Fi connections. In some examples, some or all of the above example connections may be used to form the layered network.

Some or all of the nodes are the network are configured to connect to (i.e. join or re-join) the layered network according a connection protocol. The connection protocol may vary according to the particular layer of the network in which the connecting node is connecting to (i.e. attempting to join or re-join). Before the connection protocol is described in detail, a series of example layered networks that may be created, or enforced, by the connection protocol will be described. However it will be appreciated that these are only illustrative examples, and in general any layered network that obeys the connection protocol may be created.

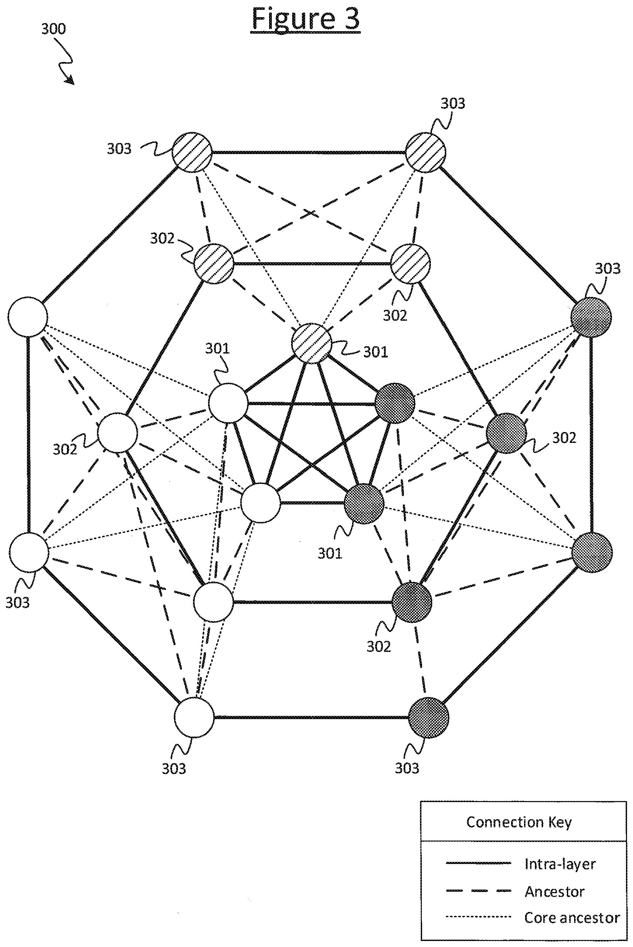

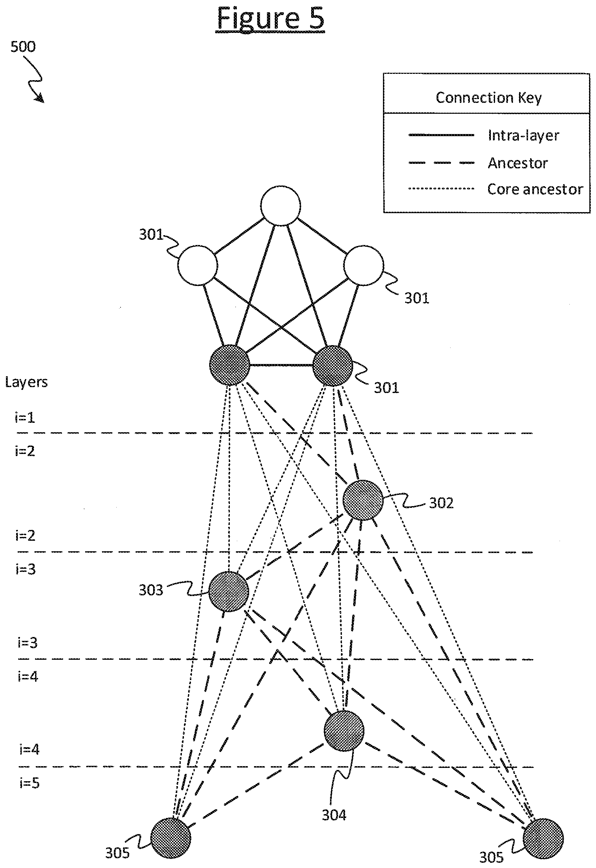

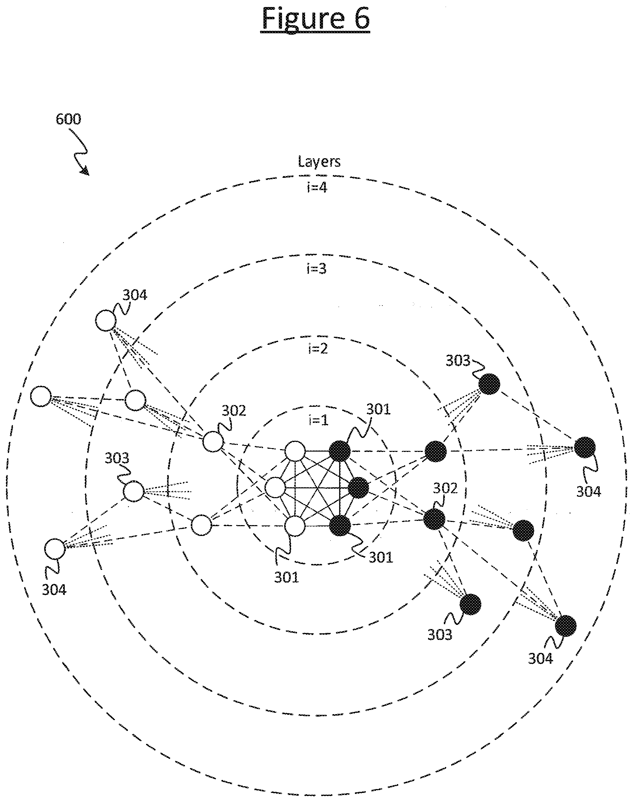

Figure 3 illustrates a schematic representation of an example of a layered network (LN) 300. In general, a LN includes a core network (or core layer) made up of core nodes 301, and a series of layers (or shells). The core layer is also referred to as the first layer of the LN. The series of layers extend outward of the core layer, in order, from a second layer made up of second nodes 302, to one or more outer layers. Each outer layer is made up of a set of outer nodes 303. Only one outer layer is shown in Figure 3 but it will be appreciated that a LN may comprise any number of outer layers. As a particular example, Figure 5 illustrates an example of a LN 500 comprising five layers, and Figure 6 illustrates an example of a LN 600 comprising four layers.

The example LN 300 of Figure 3 comprises five core nodes 301, six second nodes 302 and eight outer nodes 303. In some LNs 300, the number of nodes may increase with each layer, i.e. the core layer is made up of the least number of nodes and the outermost layer is made up of the greatest number of nodes. In other examples, one or more of the layers between the core layer and outermost layer may be made up of the greatest number of nodes. In this example, the core layer is the innermost layer of the LN 300, the second layer is an intermediate layer and the outer layer, being the only outer layer, is the outermost layer.

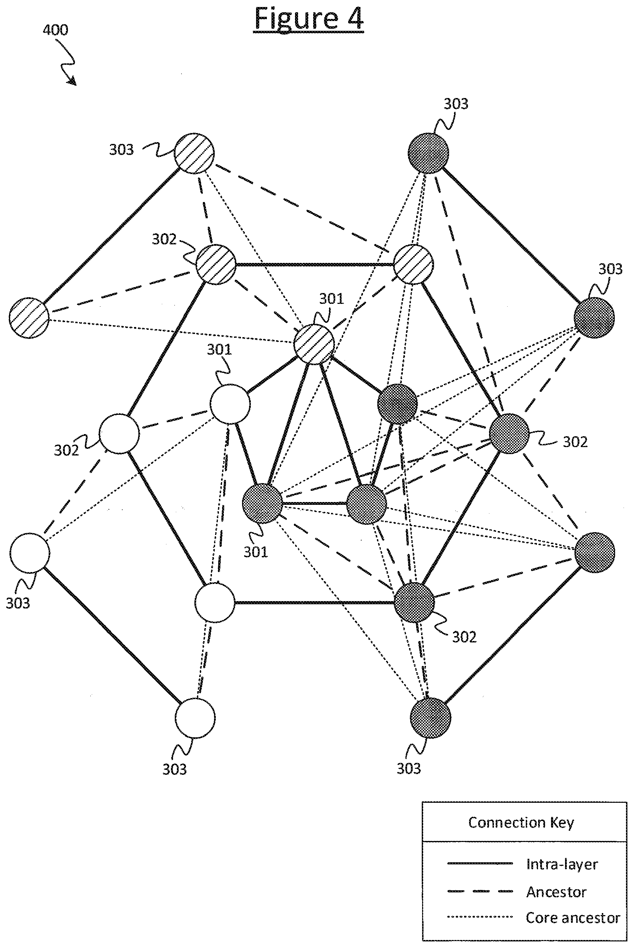

The core layer (a network within the LN) in this example forms a complete graph, i.e. each core node 301 is connected to each other core node 301. For a core layer of five core nodes 301, in the example given the core layer requires ten distinct core connections (i.e. a connection between two core nodes). In other examples (e.g. Figure 4), the core layer may not be a complete graph. The core layer may form a "near-complete graph". In a near-complete graph, at least one core node 301 is not connected to at least one other core node 301. It may be that only one core connection is missing. In a particular example of a near-complete graph, each core node 301 may be connected to one or more but not all of the other core nodes 301.

The second layer comprises second nodes 302. Note that the term "second node" is used only as a label for nodes 302 that are situated, by construction, in the second layer of the LN 300. Each second node 302 is connected to at least one core node 301. In some examples, each second node 302 may be connected to only one core node 301. Alternatively, some or all of the second nodes 302 may be connected to more than one core node 301. For instance, some or all of the second nodes 302 may connect to each and every one of the core nodes 301. In the example LN 300 of Figure 3, each core node 301 is connected to two second nodes 302. However, in this example, some second nodes 302 (those shown as striped circles) are connected to one core node 301, whilst some second nodes 302 (those shown as white circles, and those shown as shaded circles) are connected to two core nodes 301. Second nodes 302 (and outer nodes 303 of outer layers) that are connected to the same core nodes 301 are referred to as a "community". For instance, each white node together forms one community, each striped node together forms a community, and each shaded node together forms yet another community. Connections between the second nodes 302 and the core nodes 301 are referred to as "ancestor connections" and are shown as wide dotted lines.

In the example of Figure 3, each second node 302 is connected to two other second nodes 302. In some examples, some or all of the second nodes 302 may not form connections with other second nodes, e.g. some second nodes 302 may be connected to other second nodes 302 whilst some second nodes may be connected to other second nodes 302. These "intra-layer" connections are shown as solid lines between nodes in Figure 3.

The outer layer of Figure 3 comprises outer nodes 303. Note that the term "outer" in "outer layer" here does not in itself necessarily limit to the outermost layer of the LN network as a whole, though that is one possibility. Each outer node 303 is connected to at least one second node 302. In some examples, each outer node 303 may be connected to only one second node 302. Alternatively, some or all of the outer nodes 303 may be connected to more than one second node 302. For instance, some or all of the outer nodes 303 may connect to each and every one of the second nodes 301. In the example LN 300 of Figure 3, each outer node 303 is connected to two second nodes 302. Some second nodes 302 (i.e. the striped nodes) are connected to two outer nodes 303, and some second nodes 302 (i.e. the white nodes and shaded nodes) are connected to three outer nodes 303.

In the example of Figure 3, each outer node 303 is connected to two other outer nodes 303 of the same layer. In some examples, some or all of the outer nodes 303 may not form any connections with other outer nodes 303 of the same layer. Some or all of the outer nodes 303 may form at least one connection with another outer node 303 of the same layer.

As well as being connected to at least one second node 302, each outer node 303 is also connected to at least one core node 301. A connection between an outer node 303 and a core node 301 is referred to as a "core ancestor connection" and is shown as a thin dotted lines. Each outer node 303 may be connected to each of the core nodes 301 that their ancestral second node(s) 302 is/are connected to. As shown in Figure 3, each outer node 303 may be connected to each of the core nodes 301 that their ancestral second node(s) 302 is/are connected to, and to no other core nodes 301. In this case, each outer node 303 belongs to a single community.

Figure 4 illustrates a schematic representation of another example of a LN 400. Like the LN 300 of Figure 3, the example LN 400 comprises a core layer, a second layer and an outer layer. These example LNs 300, 400 share the same number of nodes (i.e. five core nodes 301, six second nodes 302 and eight outer nodes 303), but include a different number of connections. For instance, in this example the core layer is not a complete graph as some connections between core nodes 301 are not present. Another difference is that two communities (white nodes and shaded nodes) comprise a single core node 301, whilst another community (shaded nodes) comprises three core nodes 301. Yet another difference is that the degree of nodes in the outer shell of LN 400 is now one, unlike the degree of nodes in the outer shell of LN 300 which is two. That is, in this example LN 400, each outer node 303 is connected to a single other outer node 303. Therefore the nodes of different layers have a different degree.

Figure 5 illustrates a schematic representation of another example of a LN 500. In this example, only some core nodes 301 are connected to second nodes and outer nodes 303. That is, in this example some core nodes 301 only form connections with other core nodes 301. Therefore in this example the LN 500 comprises a single community (shaded nodes). The LN 500 of his example comprises five layers: a core layer, a second layer, and three outer layers. The core layer is made up of five core nodes 301 that form a near-complete graph. In this example of a near-complete graph, only a single core connection is missing. The second layer is made up of a single second node 302 which is connected to two core nodes 301. The second layer is made up of a single second node 302 which is connected to two core nodes 301. The third layer is made up of a single outer node 303 which is connected to the second node 302 via an ancestor connection. The outer node 303 of the third layer is also connected to the two core nodes 301 that the second node 302 is connected to. The outer node 303 is connected to the two core nodes 301 via respective core ancestor connections. The fourth layer is also made up of a single outer node 304. The outer node 304 of the fourth layer is connected to the outer node 303 of the third layer, via an ancestor connection, and to the second node 302, via an ancestor connection. The outer node 304 of the fourth layer is also connected to the two core nodes 301 that the second node 302 and the outer node 303 of the third layer are connected to. The outer node 304 is connected to the two core nodes 301 via respective core ancestor connections. Finally, the fifth layer is made up of two outer nodes 305. The two outer nodes 305 of the fifth layer are connected to the outer node 304 of the fourth layer, and to the outer node 303 of the third layer, and to the second node 302, wherein each connection is an ancestor connection. The two outer nodes 305 are also connected to the two core nodes 301 via core ancestor connections. In this example LN 500, the node of the second layer and the nodes of the outer layers are not connected to any other nodes of the same layer.

Figure 6 illustrates a schematic representation of another example of a LN 600. This LN comprises two communities of nodes, as illustrated by the white nodes and the black nodes. In this example the core layer forms a complete graph (i.e. network of nodes). Each community comprises a distinct set of three core nodes 301. This example LN 600 comprises four layers (a core layer, a second layer and two outer layers). Each node of an outer layer is connected to one node in a preceding layer. Like the example LN 500 of Figure 5, the nodes of the second layer and the nodes of the outer layers are not connected to any other nodes of the same layer.

In some embodiments, the LN 300, 400, 500, 600 (denoted by "300" from now on for brevity) may be a "blockchain layered network (BLN)". The term BLN is defined herein as a layered network that comprises a blockchain network, or at least part of a blockchain network, e.g. the blockchain network 106 described with reference to Figure 1.

BLNs are inspired by Mandala networks and share some similar features but are designed to allow more flexible and desirable connectivity structures, e.g. for service and user networks that utilize the blockchain network 106.

A BLN 300 may comprises at least part of a blockchain network 106 at its core. In general, the nodes of the layered network are overlaid on an underlying infrastructure network such as the internet 101. Some or all of the core nodes are nodes 104 of the blockchain network 106. They may comprise mining nodes 104M, storage nodes 104S, or a combination thereof. In embodiments each of the core nodes is a mining node 104M and/or storage node 104S (e.g. full copy node).

Each of the outer nodes 303 (or each of the outer nodes of the outermost layer) may be an end-user node, comprising the computer equipment of a user. This could be an individual user or an organization such as a company, academic institution, or government institution, etc. Hence each outer node 303 may comprise one or more user terminals and/or a server comprising one or more server units at one or more sites. Each outer node 303 comprises memory comprising one or more memory units, and processing apparatus comprising one or more processing units. These may for example take any of the forms of memory medium and/processor as those discussed previously in relation to other network elements or user equipment. The memory stores client software arranged to run on the processing apparatus, wherein the client software is configured so as when run to operate the node as a client of a protocol that obeys the connection protocol in accordance with any of the following embodiments or similar. Optionally, one or more of the end-user nodes may comprise the user equipment 103 of a user 102 of the blockchain network 106, and the client software may comprise a blockchain wallet application 105 or the like.

Each second node 302 may take the form of a server comprising one or more physical server units. Each such node comprises memory comprising one or more memory units and processing apparatus comprising one or more processing units. These may for example take any of the forms of memory medium and/processor as those discussed previously in relation to other network elements. The memory stores software arranged to run on the processing apparatus of the second node 302. This software is configured so as when run to obey the connection protocol in accordance with any of the following embodiments or similar. In some embodiments, the software is configured so as when run to provide a service that operates in accordance with any of the embodiments described below or similar.

In some examples, some or all of the second nodes 302 may operate a smart contract service. The smart contract service is configured to perform a predefined operation in response to, and based on, a blockchain transaction transmitted to the smart contract service by one of the other nodes of the LN 300, e.g. by an outer node 303. For instance, the smart contract may transmit a blockchain transaction to a core node 301 in response to receiving a particular blockchain transaction from an outer node 303.

In other examples, some or all of the second nodes 302 may operate, amongst them, a distributed database. That is, each second node 302 that operates the distributed database is configured to store data received from another node of the LN 300, e.g. an outer node 303. The second node 302 that receives and stores data may be configured to propagate the data to other second nodes 302 that are also operating the distributed database.

The nodes 301, 302, 303 are configured to form connections between one another at the overlay network level. That is, the nodes 301, 302, 303 of the layered network are configured to obey an overlay network protocol which specifies what connections they can and cannot form with other nodes 301, 302, 303 of the layered network. Hence, although all the nodes may be (but not necessarily) physically capable of connecting to one another via the underlying infrastructure (e.g. the internet), when they are participating as nodes 301, 302, 303 of the layered network, operating in accordance with the relevant overlay network protocol of the layered network 300, then the connections between such nodes 301, 302, 303 may be more limited. A connection between two nodes 301, 302, 303 of the layered network 300 means those nodes can communicate directly, which in this context means without having to perform a hop via another node 301, 302, 303 of the layered network 300. In the context of an overlay network such as the layered network, a "connection" means a connection (i.e. edge) at the level of the layered network 300 (i.e. the level of the overlay network protocol of the layered network).

In embodiments where the LN 300 is a BLN, some or all of the second nodes 302 may be configured to transmit blockchain transactions to the core nodes 301 that those second nodes 302 are connected to. In some examples, a second node 302 may generate a blockchain transaction before transmitting it to the core node(s) 301. In other examples, a second node 302 may forward the blockchain transaction to the core node(s) 301. For instance, the second node 302 may receive he blockchain transaction from an outer node 303, and then send the received blockchain transaction to the core node(s) 301. Similarly, a given second node 302 (i.e. some or all of the second nodes) may be configured to obtain blockchain transactions from the core node(s) 301 and/or outer nodes 303 that are connected to a given second node 302.

Additionally or alternatively, some or all of the outer nodes 303 may be configured to transmit blockchain transactions to the core node(s) 301 that they are connected to. The outer nodes 303 may also be configured to transmit blockchain transactions to the second node(s) 302 that they are connected to. In some examples, an outer node 303 may transmit a blockchain transaction to a second node 302 and to a core node 301.

Some or all of the outer nodes 303 may be configured to transmit a blockchain transaction to other outer nodes 303, e.g. outer nodes in the same layer, or outer nodes of the previous layer or the next layer in the ordered set of layers.

In embodiments where the core nodes 301 of the BLN 300 each perform the role of a blockchain node 104, some or all of the second nodes 302 and/or outer nodes 303 may be configured to request confirmation that a given transaction has been accepted in the pool of transactions of the mining node 104M that a given second node 302 or outer node 303 is connected to. The pool 154 (sometimes referred to as a mempool) comprises transactions that have been validated according to a set of consensus rules of the blockchain network 106. If a transaction (e.g. a "first transaction") is included in the pool 154, a mining node 104M will not accept another transaction (e.g. a "second transaction") that attempts to double spend an output referenced by an input of the first transaction. Therefore second nodes 302 and/or outer nodes 303 can query a core node 301 to check that a transaction (e.g. a transaction submitted by the node 302, 303 to the blockchain network 106) has been accepted, or check whether a transaction (e.g. a transaction received from another node of the BLN 300) is a double spend attempt. The core nodes 301 are configured to transmit the reply to the request to the requesting node 302, 303.

Additionally or alternatively, the second nodes 302 and/or the third nodes 303 may be configured to transmit a request to a core node 301 for a Merkle proof of a transaction that has been mined in a block 151 of the blockchain 150. Merkle proofs will be familiar to the skilled person. A Merkle proof is a sequence of hashes which trace back to the Merkle root. To verify whether a transaction has been mined in a block 151, a node 302, 303 takes the hash of the transaction, concatenates it with a first hash in the sequence of hashes of the Merkle proof (i.e. a hash partner at the same level of the Merkle tree as the hash of the transaction), and hashes the result. This process of concatenation and hashing is repeated until all of the hashes in the Merkle proof have been utilized. If the resulting hash is identical to the Merkle root, the transaction must be included in the Merkle tree, and therefore the block 151. The core nodes 301 are configured to transmit the Merkle proof to the requesting node 302, 303.

Additionally or alternatively, the second nodes 302 and/or the third nodes 303 may be configured to transmit a request to a core node 301 for a block header of a given block 151. Amongst other data, the block header comprises the Merkle root of the transactions mined into that block 151. The core nodes 301 are configured to transmit the Merkle proof to the requesting node 302, 303.

In some embodiments, some or all of the core nodes 301 may be configured to transmit a set of transactions to some or all of the second node(s) 302 and/or some or all of the outer node(s) that are connected to the core node 301. The transactions in the set may share a common attribute. For instance, a core node 301 may transmit all transactions that include a specific protocol flag. The flag may be included in an output of the transactions, e.g. in an unspendable output. As another example, the transactions may comprise a specific (and same) blockchain address, e.g. they may be payable to the same blockchain address. An outer node 303 may have an agreement with the core node 301 that the core node 301 will send any transactions payable to an address associated with the outer node 303. As yet another example, the transactions may comprise a secondary consensus ruleset. That is, the transaction may include, in an output, more than one control branch, each control branch being specific to a respective consensus ruleset. The output may comprise a first control branch specific to a first ruleset and a second control branch specific to a second ruleset (the two control branches may be included in an if-else condition). If the node 302, 303 is configured to implement the second ruleset, the core node 301 may transmit the transaction to the node 302, 303. If the node 302, 303 is neither configured to implement the first ruleset nor the second ruleset, the core node does not transmit the transaction to the node 302, 303.

A core node 301 that is a mining node 104M may include an identifier (e.g. a "Miner ID") specific to that mining node 104M in a generation transaction (also referred to as a "coinbase" transaction) mined into a block 151 by that mining node 104M. Other nodes of the BLN 300 may use the identifier to identify that mining node 104M on the network.

Another way of identifying nodes 301, 302, 303 of the LN 300 is by way of digital certificates. Some or all of the nodes 301, 302, 303 may be associated with a digital certificate. The digital certificate includes, and attests to, an identifier of a respective node, e.g. a public key associated with that node, a network address (e.g. an IP address) of the node, etc. A node of the LN 300 may use the digital certificate of a different node to connect to that node. For example, an outer node 303 may obtain a digital certificate from a second node 302 and use the identifying information of the second node included in the digital certificate to connect to the second node 302.

Nodes of a given layer may issue digital certificates to nodes of a next layer in the ordered set of layers, i.e. core nodes 301 may issue digital certificates to second nodes 302, second nodes 302 may issue digital certificates to outer nodes 303 of a first outer layer, and so on. In some examples, nodes of a given layer may issue digital certificates to nodes of the same layer, e.g. a second node 302 may issue a respective digital certificate to one or more other second nodes 302.

**Connection Protocol:** As set out above, each node connecting to the layered network 300 may connect according to a connection protocol. That is, the connecting node must obey the rules of the connection protocol. The connecting node may only form connections that are allowed by the connection protocol. No other connections may be formed. In examples, the connecting node may be a core node 301, a second node 302 or an outer node 303. In some examples, each node of the LN 300 must obey the connection protocol. In other examples, only nodes that are connecting to the LN 300 for the first time, or are re-joining the LN 300, must obey the connection protocol. Figures 3 to 6 illustrate example LNs 300, 400, 500, 600 that are established according to the connection protocol.

Note that, physically speaking, each of the nodes of the LN 300 may in some examples be connected or capable of connecting to one another at some other level, e.g. via the internet. The connection protocol imposes restrictions on what connections can be formed at the level of the overlay network, i.e. at the level of the layered network, some connections do not exist or are not allowed. Each connecting node of the LN 300 is configured to operate in accordance with an overlay-level protocol (which comprises the connection protocol) of the LN 300 which determines what connections the nodes can and can't form at the overlay-level. In other words a connection is an allowed communication channel which two nodes are configured to be allowed to form by their protocol. If a node has a connection with another node, then it can commutate with that node without hopping via another node of the layered network, but if it does not then it cannot and may only communicate by hopping via one or more other nodes that do have connections between them.

The connection protocol requires that the connecting node connects to at least one node of a preceding (more inner) layer and to at least one core node, with the exception that a core node may, in some examples, be the innermost layer and so cannot connect to a preceding layer. In examples where the connecting node is a second node, these two requirements are equivalent. If the connecting node is an outer node of a first outer layer, the connecting node connects to at least a second node 302 and a core node 301.

The connection protocol may require that the connecting node connects to more than one core node. The connection protocol may further require that the connection node connects to more than one but not all of the core nodes, e.g. all but one core node. The connecting node may be a second node that must connect to two or more core nodes. That is, some or all of the second nodes must connect to two or more core nodes (and in some examples, not all of the core nodes).

The connection protocol may require that the connecting node connects to one or more second nodes. If the connecting node is a second node, this means the connecting (second) node must connect to one or more different second nodes. If the connecting node is an outer node, the connecting (outer) node must connect to one or more second nodes. The connecting outer node may be an outer node of the first outer layer, or an outer node of a second layer, and so on.

The connection protocol may require that an outer node that is connected to a node of a preceding layer, must connect to some or all of the core node(s) that the node of the preceding layer is connected to (referred to above as "core ancestors"). For example, an outer node may be connected to a second node. In that case, the outer node must also connect to the core node(s) that the second node is connected to. If the outer node is connected to more than one second node, the connection protocol may require that the outer node must connect to the core node(s) that each of the second nodes are connected to. As another example, an outer node of a second outer layer may be connected to an outer node of a first outer layer. In that example, the connection protocol requires that the outer node of the second outer layer must connect to the core node(s) that the outer node of the first outer layer is connected to.

The connection protocol may require that an outer node connects to one or more (e.g. two) outer nodes of the same outer layer. The connection protocol may require that each outer node connects to one or more outer nodes of the same layer. Alternatively, some outer layers may include outer nodes that form one or more same layer connections, and some outer layers may include outer nodes that do not form one or more same layer connections. The connection protocol may require that each outer node of the same outer layer must connect to the same number of different outer nodes of that layer. For example, each outer node of the first outer layer may be required to connect to two outer nodes. Each outer node of the second outer layer may be required to connect to three outer nodes. That is, the number of outer nodes of the same layer that an outer node is connected to may vary between outer layers.

In some embodiments, an outer node of an $i^{th}$ outer layer (e.g. a third outer layer) may be connected to an outer node of a preceding $(i-1)^{th}$ layer (e.g. a second outer layer). The connection protocol may require that an outer node (e.g. all outer nodes) of a successive $(i+1)^{th}$ outer layer must connect to each node of the $(i-1)^{th}$ layer that the outer node of the $i^{th}$ outer layer is connected to. For instance the outer node 305 of the fifth layer in the LN 500 of Figure 5 is connected to the outer node 304 of the fourth layer and to the outer node 303 of the third layer. In some examples, the connection protocol may require that the outer node of the $(i+1)^{th}$ must connect to each outer node of each preceding layer that the outer node of the $i^{th}$ outer layer is connected to.

In embodiments where some or all of the nodes of the LN 300 are associated with digital certificates, the connection protocol may require that the connecting node must only connect to nodes that are associated with nodes that are associated with a respective digital certificate. In some embodiments, the connection protocol may require that the connecting node (e.g. an outer node) must only connect to a respective node (e.g. a second node) if the digital certificate associated with the respective node has been issued by a node (e.g. a core node) of a layer preceding the respective node, or in some examples, a node (e.g. a different second node) of the same layer of the respective node.

In some embodiments, the connection protocol may require that the connecting node can only connect to nodes that have issued the connection node with a digital certificate. That is, connecting to a node comprises receiving a digital certificate from that node.

The connection protocol enables the construction of a BLN. Like a Mandala network, a BLN is built up in layers. Unlike a Mandala network, the first layer may form an incomplete graph (e.g. a near-complete graph). Other differences between a BLN and a Mandala network are that, in a BLN, nodes in each successive layer may have different degrees, nodes may be connected to more than one node in the central layer, and/or the degree of nodes may differ between layers.

Preferably, for all nodes outside the central core:

(i) Each node is connected to $m$ out of $n_1$ nodes in the central core.
(ii) Each node is connected to a node in every layer, where $g$ is the total number of layers.
(iii) Each node is a member of exactly one community. There are at most $n_2$ communities, where $n_2$ is the number of nodes of the second layer.
(iv) Each node is connected to every other node by at most 3 hops. This is referred to as the *diameter* of the graph.

In a BLN, a "community" is defined as the set of nodes that share exactly the same set of core ancestors. Figure 6 shows a BLN with network $n_1 = 6$, $m = 3$ and $g = 4$, with the nodes of two distinct communities drawn: a black node community and a white node community. The white node community comprises nodes which are all connected to three nodes on the LHS of the central core, while the black node community comprises nodes which are all connected to the three nodes on the RHS of the central core.

A characteristic of Mandala networks is that all nodes outside of the core layer ($i = 1$) are connected to *exactly one* core ancestor (i.e. $c_i = 1$ everywhere). This heavily contributes to the emergent properties of Mandala networks:

- Having a mean shortest path length that asymptotes to a constant as the network size ($N = \Sigma_i n_i$) increases.
- Becoming highly sparse as the network size ($N = \Sigma_i n_i$) increases.
- Robust against random node failures.

A characteristic of a BLN is that all non-core nodes connect to *at least one* ancestor. However, the BLN definition accommodates non-core nodes having up to $m$ connections to core ancestors (i.e. $1 \leq c_i \leq m$ everywhere). The reason for the generalisation from $c_i = 1$ to $1 \leq c_i \leq m$ throughout a BLN can be understood as an artefact of the blockchain protocol. The protocol that defines a blockchain system relies on a probabilistic security model. In essence, this means that any participant (node) in a BLN with a vested interest in an event being recorded on the blockchain 150 must take into account the probabilistic security model by connecting to a minimum fraction $f$ of network hashing power, where 100% of total hashing power is distributed amongst the nodes in the core layer of the BLN.

Assuming that the core layer exhibits a uniform equilibrium distribution of hash power amongst its $n_1$ core nodes, then the minimum fraction of nodes is:

EP 4 097 917 B1

$$f = m/n_1$$

The blockchain protocol indicates that the lower bound for the minimum fraction is $f$ = 0.51, but the network participants of a BLN at scale may demand a higher fraction (e.g. $f$ = 0.67) than this for increased resilience (e.g. to double-spending). A BLN may be characterised by the choice of the parameter $m$, as this dictates the probabilistic security of operations for participants within the BLN, which will depend on the particular use case of needs of the BLN in question.

Nodes in the second layer $L_2$, being closest to the core, are most strongly dependent on the probabilistic security model of the blockchain protocol, and this dependency may decrease in layers approaching $L_g$. The connection protocol may require nodes in $L_2$ to connect to exactly $c_2 = m$ core ancestors, while nodes in all successive layers $i > 2$ may connect to anywhere in the range $1 << c_i \leq m$ of core ancestors. In some examples, nodes is all successive layers must connect to $m$ core ancestors.

Nodes outside the central core of a BLN may have an 'SPV-like' connection to the core. This means that they can do the following.

a) Send a transaction to a core node
b) Ask a core node if a transaction has been accepted in its mempool/candidate block
c) Ask for the Merkle proof of a transaction that has been mined in a block
d) Ask for an up-to-date list of block headers

These simple, targeted requests are designed to put as little burden on the core nodes 301 as possible whilst allowing for the widest possible range of scalable solutions to be built on top using a BLN. Many use-cases will require no more that the type of connection described above. In some examples, the second nodes 302 and/or outer nodes 303 are configured such that they can only perform actions a) to d) above. However, other solutions, typically enterprise level, may require the core to actively serve them more data, such as transactions that satisfy specific criteria. Therefore actions a) to d) are a minimum requirement for a BLN but additional data transfer between those nodes and the core is also possible in some examples.

For nodes operating smart contracts, some may only need SPV-like actions a) to d), whilst others may require agreements put it place to receive more data from core nodes.

In some BLNs, users may operate nodes of layer 3 or higher, and a smart contract may be operated by nodes of layer 2 or higher. Users cannot practically 'listen' to the blockchain for a transaction with a particular output address on a continual basis as to do so would require constant monitoring of the blockchain 150 for transactions including the particular address. Given the number of transactions that can be transmitted to the blockchain per period of time is continuing to increase, such constant monitoring is not practical for an end user. Although it is common amongst the wallet architectural of some blockchains to constantly monitor the blockchain, it is not a scalable solution given that both the number of transactions submitted to the blockchain per period of time, and the number of users of the blockchain, are expected to increase dramatically in the future. Consider the following example: Alice would like to pay Bob. She creates a transaction for the desired amount with an output address that she knows belongs to Bob. Alice then submits this transaction to the mining network, and not directly to Bob. In order for Bob to know that the transaction has been accepted he must 'listen' to the blockchain to see if and when a transaction with his output address has appeared on the network. He must ask a mining node to do this on his behalf. This means that a mining node has to keep a record of Bob's address and check whether *every transaction it receives* matches this address. Note that there is no economic incentive for a miner to do this. Assuming that a miner must process a million transactions per second and must check whether they match a million addresses shows that this quickly becomes unrealistic.

Instead, in a BLN, Alice may be directly connected to Bob and can send him the transaction directly. Bob can then send the transaction to miners in the core and at the same time ask if they accept the transaction as valid. Miners are incentivised to accept the transaction as it contains their fee, and they are incentivised to confirm whether they have accepted the transaction so that they lower the risk of constructing a block that will be orphaned. In order to make the system even more secure, Alice may send Bob the Merkle proofs of the inputs to her transactions. Bob may check these Merkle proofs as he has a copy of the block headers. This ensures Bob that Alice's inputs were part of the blockchain 150 at one point, and if she has spent them already then Bob will have proof of the double spend as he has received signatures from Alice in the transaction that she has given him. Note that Bob may be a smart contract (second node) and Alice may be a user (outer node) who would like to interact with that smart contract. If the smart contract is 'light' in the sense that the smart contract operator has not made any specific agreement with a mining node to facilitate the processing of the smart contract, then it too cannot rely on listening to the blockchain 150 in order to receive a transaction that triggers a change in state. Alice must send such a transaction directly to the smart contract.

A service provider may operate a node in layer 2 or higher. The case of a service provider is different from that of a user or lightweight smart contract. A service provider may have a commercial agreement with a core mining node, or collection of core nodes, who then propagate a certain subset of transactions to the service provider nodes. Such transactions should be easily identifiable and satisfy specific criteria, for example:

- OP_RETURN data with a specific protocol flag. For example, the Metanet protocol, the Tokenized protocol, or a digital certificate protocol.
- Output addresses matching a small, specific set. For example, enterprise-level smart contracts or address whitelists/blacklists.
- A secondary consensus ruleset indicated by an OP_VER control branch.

In addition, transactions sent to the core that follow these rules, or are in other ways identified as part of the community engaged in the service-level agreement, may have lower (or even zero) transaction fees. The shortfall may be made up by a higher transaction volume or by revenue in fiat from the service-level agreement.

All nodes of the BLN 300 may be associated with a semi-permanent public key associated with their identity. This public key can allow for secure communication and provide a link to public keys used in blockchain transactions, either through a deterministic derivation of the identity key, or by signing or encrypting the transaction keys using the identity key.

Two ways of identifying mining core nodes are:

1) Miner ID. Miners may elect to identify themselves by adding their identity key to the input of the coinbase transaction in each block that they mine.

2) Network analysis. Some miners choose to remain anonymous. However, it is still possible to identify which nodes are constructing blocks by analysis of the network, for example by looking at where the new blocks originate from.

It is important that nodes of a BLN are able to identify both types of miners so that they can poll as many miners as possible as to whether their transactions have been accepted. Core nodes that have a Miner ID are able to issue digital certificates to layer 2 nodes. This may be because they have a service level agreement with these nodes, or it may be because these nodes have requested a certificate for a fee. In this sense core nodes can act as a Certificate Authority (CA).

With or without a certificate from a core node, a layer 2 node may seek an external CA to issue them a digital certificate. Therefore, each layer 2 node may have at least one digital certificate attesting to their identity. They may issue certificates to other nodes in layer 2 thereby creating a web of trust between them. Nodes in layer 2 may issue certificates to nodes in layer 3, and nodes in layer 3 may issue certificates to nodes in layer 4, and so on, creating a hierarchy of certificates referred to as a Public Key Infrastructure (PKI).

In fact, such a PKI can be used not just for the identification of nodes in a BLN, but ensuring that the correct BLN structure is adhered to. For example, if a layer 3 node issues certificates to too many layer 4 nodes, or does not ensure that they have the appropriate connections to others nodes in the system, then the certificate of the layer 3 node may be revoked. These certificates themselves may be stored on the blockchain 150. This makes the PKI transparent and easily auditable.

ORDERING AND TIMESTAMPING

There may be a number of applications that can be implemented using a blockchain where the order of the application data matters. To address this, according to embodiments of the present disclosure, one or more nodes of a network may be configured to act as an attestation service to arbitrate between different items of data submitted to the service in order to determine a definitive order of the data items, and then have that order recorded immutably on a blockchain.

The attestation service is implemented at one or more attestation nodes. In embodiments these are nodes of an overlay network overlaid on an underlying infrastructure network such as the Internet. However it is not excluded that alternatively they could be infrastructure nodes of a network in their own right, e.g. a private network within an organization. Either way, the one or more attestation nodes are arranged to receive items of data from one or more client nodes, to form transactions recording the order of the received data items, and to forward these transactions on to one or more core nodes for recordal on a blockchain 150. The core nodes are nodes 104 of the blockchain network 106. They may comprise mining nodes 104M, storage nodes 104S, or a combination thereof. In embodiments each of the core nodes is a mining node 104M and/or storage node 104S (e.g. full copy node).

Each of the client nodes may be an end-user node, comprising the computer equipment of a user of the service. This could be an individual user or an organization such as a company, academic institution, or government institution, etc. Hence each client node may comprise one or more user terminals and/or a server comprising one or more server units at one or more sites. Each client node comprises memory comprising one or more memory units, and processing apparatus comprising one or more processing units. These may for example take any of the forms of memory medium and/processor as those discussed previously in relation to other network elements or user equipment. The memory stores client software arranged to run on the processing apparatus, wherein the client software is configured so as when run to operate the node as a client of the attestation service provided by the attestation node(s) in accordance with any of the following embodiments or similar.

Optionally, one or more of the transmitting end-user nodes may comprise the user equipment 103 of a user 102 of the blockchain network 106, and the client software may comprise a blockchain wallet application 105 or the like. However the attestation service may be arranged to formulate at least some transactions on behalf of such end-users, rather than all such transactions necessarily being formulated at the wallet 105 of the user.

The attestation nodes are arranged to provide an attestation service mediating between the client nodes and the core nodes. Each attestation node may take the form of a server comprising one or more physical server units. Each such node comprises memory comprising one or more memory units and processing apparatus comprising one or more processing units. These may for example take any of the forms of memory medium and/ processor as those discussed previously in relation to other network elements. The memory stores attestation service software arranged to run on the processing apparatus of the attestation node. This software is configured so as when run to provide an attestation service that operates in accordance with any of the embodiments described below or similar. In embodiments, the identity of each attestation node may be certified by a certificate authority, to enable the client nodes, core nodes and/or other attestation service nodes to verify the identity of the attestation node. The identity of each client node may be certified by a certificate authority, to enable the attestation service nodes, core nodes and/or other client nodes to verify the identity of the client node. Interaction between such nodes for the purpose of providing or using the attestation service may be conditional on the verification. Alternatively or additionally, node versioning may be used as an alternative mechanism for node identification in an overlay network.

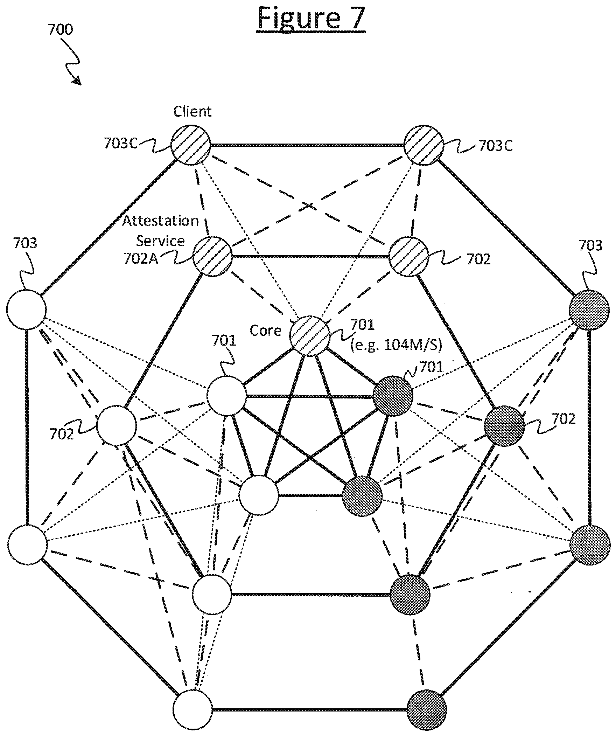

In embodiments the above arrangement may be implemented in the form a layered network 700, such as of the type described in relation to Figures 3 to 6, and as also illustrated in Figure 7 by way of example. That is, the layered network comprises: a core network comprising the core nodes 701; at least one intermediate layer around the core, each intermediate layer comprising one or more intermediate layer nodes 702; and at least one outer layer around the outermost of the intermediate layers, each outer layer comprising one or more outer layer nodes 703. Note that the term "outer" in "outer layer" here does not in itself necessarily limit to the outermost layer of the layered network 700 as a whole, though that is one possibility. In embodiments the layered network 700 of figure 7 may be the layered network 300 of Figure 3, in which case the outer layer nodes of Figure 7 are the third layer nodes of Figure 3 or 4, the intermediate layer nodes 702 of Figure 7 are the second layer nodes 302 of Figure 3 or 4, and the core nodes 701 of Figure 7 may be the core nodes 301 of Figure 3 or 4.

As discussed in relation to Figures 3 to 6, the layered network 700 may be an overlay network overlaid on an underlying physical or infrastructure network such as the Internet. In such embodiments the nodes 701, 702, 703 are configured to form connections between one another at the overlay network level. That is, the nodes 701, 702, 703 of the layered network are configured to obey an overlay network protocol which specifies what connections they can and cannot form with other nodes 701, 702, 703 of the layered network. Hence, although all the nodes may be physically capable of connecting to one another via the underlying infrastructure (e.g. the internet), when they are participating as nodes 701, 702, 703 of the layered network, operating in accordance with the relevant overlay network protocol of the layered network 700, then the connections between such nodes 701, 702, 703 may be more limited. A connection between two nodes 701/702/703 of the layered network 700 means those nodes can communicate directly, which in this context means without having to perform a hop via another node 701/702/703 of the layered network 700. In the context of an overlay network, a "connection" means a connection (i.e. edge) at the level of the overlay network (i.e. the level of the overlay network protocol of the layered network).

Each intermediate layer node 702 is connected to at least one core node 701 (blockchain network node 104) in the core network. The core network comprises at least part of the blockchain network 106. In embodiments the core network, in itself, may be a complete network.

In some cases, some of the intermediate layer nodes 702 and/or outer layer nodes 703 may comprise periphery nodes 104 of the block chain network 106, e.g. nodes other than mining nodes 104M and/or storage nodes 104S such as forwarding nodes 104F. Alternatively, they may comprise nodes that do not have any role in the blockchain network 106 (mining, storage or forwarding) other than as clients of the blockchain network 106.

Each outer layer node 703 is connected to at least one of the intermediate layer nodes in at least one intermediate layer. In embodiments each outer layer node 703 also has at least one connection to at least one core node 701 (i.e. to the blockchain network 106). In some such embodiments, one or more of the outer layer nodes 703 each have connections to more than one - but not all - of the core nodes 701. In embodiments the layered network 700 as a whole may be a non-complete network, i.e. not every node 701, 702, 703 has a connection to every other at the overlay network level. In embodiments each node within a given layer may be connected to at least one other node in the same layer. E.g. each node 702 in an intermediate layer may be connected to one or more others in the same intermediate layer, and/or each node 703 in an outer layer may be connected to one or more others in the same outer layer. In embodiments connections may also be formed between different intermediate layer nodes 702 in different intermediate layers, and/or different outer layer nodes 703 in different outer layers.

In embodiments, the layered network 700 may be configured in accordance with any of the protocol rules or structural features described in relation to Figures 3 to 6; where each intermediate layer of intermediate nodes 702 is a layer between the core and the outermost layer, and each outer layer of outer nodes 703 is a layer outside of the second layer (with the intermediate layer(s) being between the core and the outer layer(s)).

Embodiments below will be exemplified in the context of a layered network, but it will be appreciated that this is not limiting, and more generally the attesting node(s) could be any node of any type of overlay network which mediate between one or more client nodes and one or more core nodes 104 of the blockchain network 106.

In the implementation in a layered network 700, at least one of the intermediate nodes 702 in at least one intermediate layer takes the role of an attestation node 702A providing the attestation service. At least one of the outer nodes 703 in the outer layer in at least one outer layer is a client node 703C of the attestation service provided by the attestation node(s) 702A. Each core node 701 is one of the nodes 104 of the blockchain network 106, preferably a miner 104M and/or storage node 104S (e.g. full-copy node). Only two client nodes 703C and two attestation nodes 702A are shown in Figure 7 for simplicity of illustration, but it will be appreciated that there may be more. In embodiments, the client nodes 703C and attestation nodes 702A may be part of the same community as one another.

The client nodes 703C are clients at least in that they are clients of the attestation service. In embodiments the client software run on one or more of the client nodes 703C may be further configured to operate its node 703C as a client of one or more additional services provided by one or more second layer nodes 702, e.g. a database service or smart-contract service. And/or, it may be configured to operate its node 703C as a client of one or more core nodes 701 (e.g. 104M, 104S) of the blockchain network 106, such as to be able to query the blockchain 150.

Also the fact that the client nodes 703C are described as clients of the attestation service (and optionally one or more other services) does not exclude the possibility that these nodes may themselves also be servers of one or more further services to one or more further entities (not shown). E.g. a client node 703C could comprise computer equipment of a company who provides online services to customers. "End-user" herein means an end-user of a particular service in question and does not necessarily limit to an individual consumer at the end of a commercial supply chain (though that is certainly one possibility as well).

The following describes a method in which an ordering service entity 702A may use the blockchain 150 to record the ordering and time in which data elements were received from one or more client nodes 703C. Optionally the ordering service may also perform timestamping.

The method is first described for a single trusted order-attestation node 702A. This may be modelled as a single intermediate layer (e.g. second layer) node in a layered network 700 with a core of blockchain network nodes 104/701. The users of this service will then be the users of outer layer (e.g. third layer) nodes 703C which are directly connected to the service 702A and optionally also the blockchain 150 (by means of a connection to at least one core node 701 in the core).

When data elements are received from client nodes 703C in the outer layer, the intermediate layer timestamping service 702A will gather them together in such a way that an order is established. When a certain time period has passed, for example 0.1 seconds, this ordered list of data elements is encapsulated in a transaction and sent to the blockchain 150 via the core 701, and thus recorded immutably. If a timestamp is added to the records then this also records time as well as order.

An example application is to define a definitive order amongst updates to entries in a database or such like. In this case each data item received from a client node 703C may represent a respective change of state (i.e. update) to an entry in the database. However such updates are not necessarily commutative - i.e. order matters. For example, if there are two requests to perform a non-commutative operation of a data element, e.g. matrix multiplication from the left, then the order is important. In another example, one request may be to delete a file and the other to read a file. Again, the order these requests are applied makes a difference to the result.

Another example application is to implement smart contracts in an output-based (e.g. UTXO-based) blockchain model. UTXO-based transactions or the like do not inherently support smart contracts in the same way that transactions of an account-based model do, so the smart contract functionality needs to be layered on top of the basic transaction model if smart contracts are to be implemented in an output-based model such as a UTXO-based model. In this case the data items to be recorded on the blockchain 150 may again represent changes in state, e.g. changes in ownership or such like. Again, the order matters, e.g. as it may affect whether an attempted assignment of ownership is valid.

Another example application is an ordering and timestamping of digital certificates from a certificate authority (CA). Digital certificates are used to approve access rights or other electronic permissions and are used, for example, in the SSL/TLS and HTTPS security that underpins the internet. In 2011 a Dutch CA was compromised by an attacker thought to be operating from Iran. False certificates were issued for high-profile domains, and log files were tampered with on the CA's servers. Had these log files been stored on the blockchain, using an ordering and timestamping service as described below, it would not have been possible to change the log files due to the security provided by proof-of-work. It is worth noting that private keys in the company's HSMs were compromised in the attack. This highlights the fact that one cannot always appeal solely to classical cryptographic protocols to ensure information security, and it may be beneficial also to rely on other mechanisms, such as proof-of-work, to make such attacks prohibitively onerous.

In operation, the attestation node 702A is arranged to receive a plurality of data items from one or more client nodes 703C, over the overlay network connections between the intermediate and outer layers. The data items may be labelled herein $D$ by way of arbitrary terminology. The plurality of data items in question may be received from the same client node 703C or different client nodes 703C, or some from the same client node 703C and some from different client nodes 703C. They may be received directly via a connection between the client node 703C and the attestation node 702A, or may be forwarded via one or more other nodes of the layered network in between (i.e. may be received via more than one hop between the transmitting client node 703C and attesting node 702A).

The attestation node 702A is configured to determine an order of the plurality of data items $D$, thus determining a sequence of the plurality of data items. In embodiments the determined order is the order of receipt of the data items at the attestation node 702A. However it is not excluded that some other arbitration rule could be applied. For example if the data items are stamped with a time of transmission or creation by the client node(s) 703C that transmitted them, and the attestation node 702A trusts these client nodes, then the order could be the reported time of transmission or creation rather than the time of receipt. As another example the order could be dependent on a priority scheme that gives different weightings to different data items.

Whatever the determined order, the attestation node 702A attests to this order by creating a series of blockchain transactions 152 for recordal on the blockchain 150. The attesting node 702A generates a series of two or more such transactions, which may be labelled herein $Tx_0, Tx_1, Tx_2$ ... by way of arbitrary terminology. The attestation node 702A includes an indication of a different set of one or more of the data items $D$ in a payload of each successive one of the transactions $Tx$ in the series. The payload may be comprised in an unspendable output of the respective transaction. Such an output may be made unspendable by means of an opcode that terminates the locking script of that output, e.g. OP_RETURN. However in other transaction protocols payloads may be included in other ways. The set of one or more data items indicated in each successive transaction comes after the set indicated in the transaction immediately preceding that transaction in the series of transactions, according to the order of data items determined by the attestation node 702A. I.e. the order of the transactions in the series matches the order of the sets in the determined sequence of data items.

The attestation node 702A creates, or otherwise determines, a corresponding series of public/private keypairs for the series of transactions:

$P_1, P_2, P_3, ...$

The attestation node 702A uses the private key of each keypair to sign the corresponding transaction in the series of transactions:

$Tx_0 \rightarrow Tx_1 \rightarrow Tx_2 \rightarrow Tx_3 \rightarrow \cdots$.

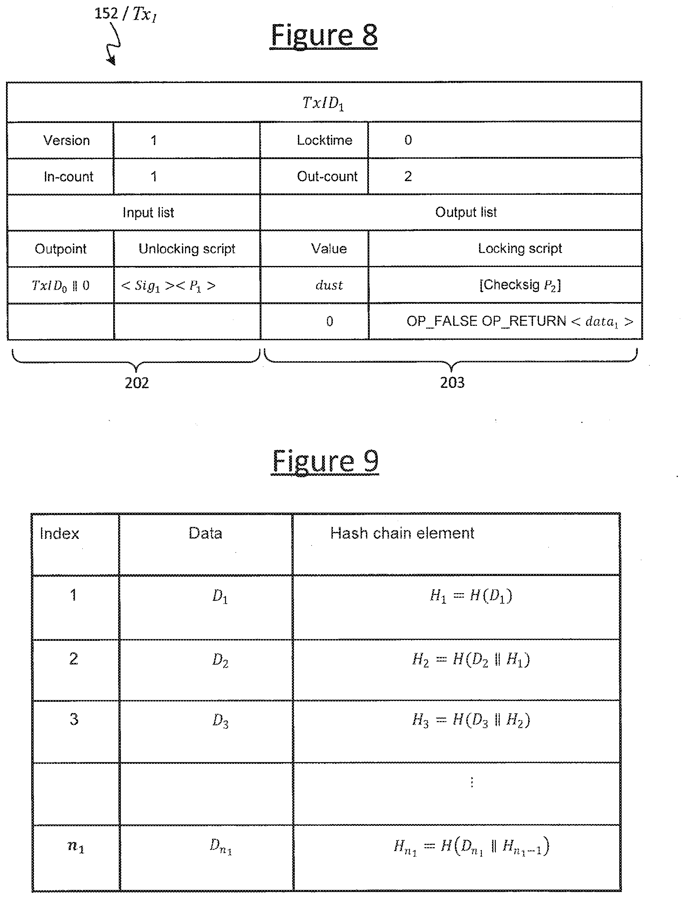

Transaction $Tx_1$ contains the signature of $P_1$ in the unlocking script in its input, and transaction $Tx_2$ contains the signature of $P_2$ etc. Each transaction also contains a payload, e.g. in an OP_RETURN field, that includes the indication of the set of one or more data items D attested to by the respective transaction. This payload is signed over by each signature (in embodiments employing the Script language, the appropriate SIGHASH flag may be used). The initial funding transaction $Tx_0$ is constructed such that it can be unlocked by a signature of $P_1$. It may have an outpoint 0 with a *dust* value. By way of example, $Tx_1$ may be constructed as shown in Figure 8. All subsequent transactions have the same structure. I.e. $Tx_2$ contains a signature using $P_2$ in an input pointing to $Tx_1$ to unlock $Tx_1$, and has a locking script in an output which can be unlocked by a signature of $P_3$, etc. The signatures can be verified by the blockchain network 106 based on the corresponding public keys of the key pairs. The funding transaction $Tx_0$ may or may not include an indication of the first set of data item (the first set of data items in the sequence could be indicated in $Tx_0$ or $Tx_1$).

Note: the form shown in Figure 8 ignores transactions fees for simplicity. This can be accounted for by adding another input and output to the transaction (e.g. administrated by attestation service).

The OP_RETURN statement contains a payload called $data_1$. This contains the data elements D, or an indication thereof, submitted by the users in an order attested to by the attestation service amongst the set attested to by $Tx_1$. (and similarly for $data_2$ in $Tx_2$, etc.). Since each transaction signs the hash of the previous transaction, this also implies an ordering of the payloads $data_1, data_2, data_3$ and so on.

A blockchain transaction cannot feasibly be double spent once it is accepted by the blockchain network 106. It also acts as a form of publishing for the order attested to the attestation service provided by the attesting node 702A. This gives confidence to a user of a client node 703 that the position in which their data element appears in order attested to by this attestation authority cannot be retrospectively altered. Once such a transaction is mined in a block 151 it becomes even more unlikely that the order will be altered as it is computationally expensive to replace an existing block.

In some embodiments the set indicated in each transaction $Tx_0, Tx_1, Tx_2$ ... consists of only a single one of the data items $D$ per transaction (i.e. each *data* payload indicates only a single respective $D$). Alternatively the set indicated in each such transaction may comprise multiple data items $D$ per transaction (each *data* payload indicates a different respective set of multiple different data items $D$). In the latter case, the payload information also specifies the order of the data items $D$ within the local set of the respective transaction. This may be achieved for example by means of an ordered list included in the payload (e.g. OP_RETURN output), and/or an index indicating the order mapped to the indication of each *D*. Examples are shown in Figures 9 to 11, to be discussed in more detail shortly.

When multiple data items *D* are indicated per transaction, some basis is required to determine which data items are to be gathered together per transaction. In principle any scheme could be used for dividing up the data items between transactions, but in embodiments this may be done based on regular time intervals. I.e. all data items *D* received by the attestation node 702A within a first instance of the regular time interval are included in a first transaction in the series, then all data items *D* received in the next instance of the regular time interval are indicated in the next transaction in the series, etc.

The exact timing of the interval between transactions may be configured by the implementation. For example, transactions may be submitted at intervals of 0.1 seconds.

The respective set of data items may be indicated in a transaction simply by including the data item(s) of that set explicitly ("in-the-clear") in the payload of the respective transaction *Tx*. Alternatively or additionally, they may be indicated in a transformed form such as a hash, encrypted form, or an r-puzzle. Examples will be discussed in more detail in relation to Figures 9 to 11. In the context of an ordering attestation service, as a minimum an "indication" of data items herein means some information enabling a querying node inspecting the transactions to verify the attested order of the data items. In some cases where the explicit values of the data items *D* are not included explicitly in the transactions, this may require that the querying node has predetermined knowledge of the values of the data items D, and is merely inspecting the transactions on-chain or in the mempools 154 of blockchain nodes 104 to confirm an expected order of those items.

In embodiments, the attestation node 702A may also include at least one timestamp in the payload of each transaction $Tx_0, Tx_1, Tx_2...$ in the series. The timestamp indicates a time at which the respective data item(s) were received at the attesting node 702A. In the case of a single data item *D* per transaction, this may simply be the time of receipt of that data item. In the case of multiple data items *D* per transaction *Tx,* each transaction payload could include a single timestamp indicating a time of arrival for the set (e.g. the time interval in which they were received), or an individual timestamp per data item *D* in the set.

When the attestation service submits a transaction containing a user's data to the blockchain 150, in some embodiments it will also send this transaction to the client node(s) 703 which submitted the data items D. This is possible since the user in an outer layer (e.g. layer 3) is directly connected to the attestation node 702A in an intermediate (e.g. layer 2). Since in embodiments the client node 703 is also directly connect to the blockchain mining nodes 104M and/or storage nodes 104S in the core, it may check independently that the transactions $Tx_0, T_{X1}, T_{X2}...$ have been accepted by the blockchain network 106. The client node 703A can thus query the mempools 154 of the miners 104M, and/or the actual blockchain 150 record on the storage nodes 104S, in order to confirm that the expected order has been attested to. Other third-party nodes may also verify this in a similar manner via any suitable connection the blockchain network 106. In some embodiments, the query by a client node 703A may be performed via a connection between the client node 703C and the core using only the SPV-like connectivity discussed previously in relation to Figures 3 to 6.

Optionally, the attestation service may also send the client node(s) 703C that submitted the data items a chain of transactions preceding the transaction containing their data. This is so that the users can be sure that there are not two competing chains of transactions with different orders that have been submitted to the blockchain by the service. The length of the chain of transactions should be appropriate for the level of trust required by the user. This trust may be outsourced: for example a certificate authority may certify the accuracy of the chain of transactions every hour.

In embodiments, client nodes 703C within a layer may also be connected to one another and can send each other (mined) transactions containing their and the corresponding Merkle proofs. Since in embodiments each outer layer (e.g. layer 3) node is independently connected to the blockchain 150, then they can verify that the Merkle proofs are correct. This allows users in an outer layer (e.g. layer 3) to agree upon an ordering of the data with only a minimal amount of temporary trust in the timestamping service, before trust in the proof-of-work on the blockchain takes over.

The following will now explore the OP_RETURN payload $data_1$ in more detail. The goal is for the service to attest to an order in which the data elements $D_1, D_2, D_3, ...$ were received in the time interval. Note that the data elements may represent hash commits of the data relevant to each user. It may be up to the user's discretion whether they choose to publicise their data or instead to record a hash commit of their data.

There are a few different ways the set of data items D and their relative order can be indicated within a transaction $T_X$. The simplest is to just index each element and since the OP_RETURN is signed over then this is attested to by the timestamping service. However, there are smarter ways to do this that provide additional evidence of ordering and allow for generalisations to distributed timestamping services.

METHOD 1.1: HASH CHAIN. A unique index i is assigned to each data element $D_i$ and an entry $H_i$ in a hash chain is created. The value of $H_i$ is dependent on the data element and the previous element of the hash chain. This means that each element of the hash chain must have been created after the previous element, enforcing an order. An example of the hash chain is shown in the table of Figure 9. This table would be included in the payload (data) of the transaction, optionally with or without the explicit *D* column being included in the transaction.

One advantage if the values of D are not explicitly included is that the hash may be smaller than D, and hence this requires fewer bits to be stored on chain. Also it means that the actual values of D do not need to be published if the user does not want to make them public. Either way, whether the Dvalues are explicitly included or not, another advantage of the hash chain is that it makes the order harder to change. Say there are 1000 data items D per transaction by way of illustration. Then to re-order these data items would require 1000 hashes to be performed, which would be computationally onerous. Thus even if the attestation node 702A is not completely trusted, this gives the user additional confidence that the data items have not been re-ordered.

In some embodiments, an attestation of a timestamp $t_i$ of the receipt of each data element $D_i$ may also be included. One way to do this is to include a timestamp in the preimage of each element of the hash chain, e.g.:

$$H_1' = H(D_1 \parallel t_1), \quad H_2' = H(D_2 \parallel t_2 \parallel H_1'),$$

etc.

In this case a column containing the time will also be added to the table of Figure 9.

The OP_RETURN payload $data_1$ is made up of the table such as shown in figure 9. The column 'Data' may be omitted to save space or to keep the data elements private. Although note that in that case, the only way for someone to prove the order of the hash chain is for all data elements to be known.

Additional security may be provided by replacing the hash functions with an HMAC. An HMAC is described in RFC 2104 and introduces a secret symmetric key to the hashing procedure. This means that only those with the knowledge of the secret key may be able to prove the order of the data.

METHOD I.2: HASH CHAIN WITH MERKLE TREE. This case is similar to the hash chain of Figure 9, but instead of publishing the entire hash chain, it is turned into a Merkle tree and just the root is published. In this case each data item Din the set is modelled as a leaf of the Merkle tree, and the Merkle root is included as the indication in the transaction. Note that an index of the data is implied by the order in which it appears in the leaves of the Merkle tree. A Merkle proof could be provided later to a user to allow the user to check the presence of a data item and its position in the Merkle tree. This method saves space in the transactions as only 256 bits are required in the OP_RETURN payload for the Merkle root.

Additionally or alternatively, each data item may be indicated in the transaction by a corresponding merkle proof for that leaf. As will be familiar to a person skilled in the art, a Merkle tree allows one to prove that a given data item is a member of a set, given the merkle root and the merkle proof for the data item (which is the chain of hashes between the root and the leaf).

METHOD 2.1: CHAIN OF SIGNATURES. In this method, a new public key is created for each data element D, and that element is signed with the new public key. This is aligned with the requirements in the timestamping protocol outlined in RFC 3161.

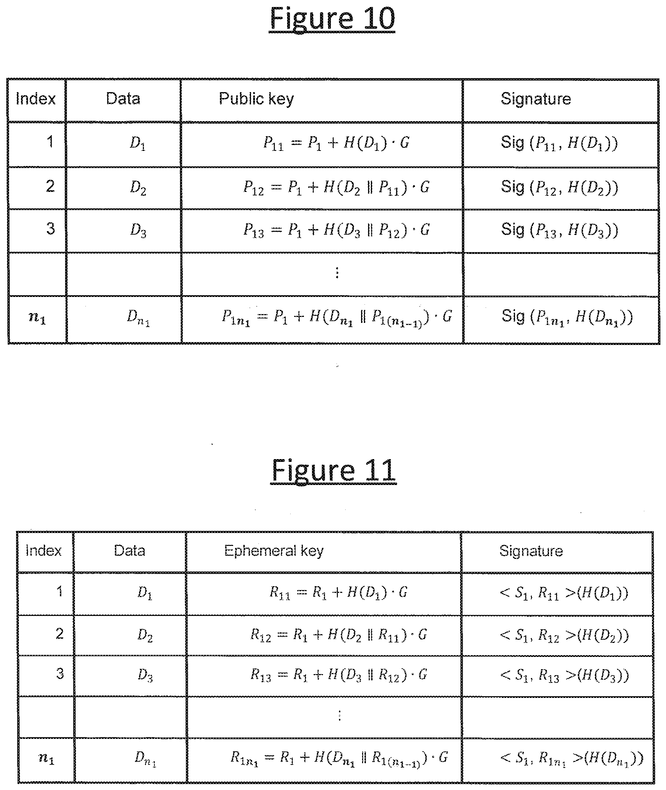

Consider the sequence of public keys and signatures shown in Figure 10. The idea is that each public key is generated based on the preceding data. Similar to the hash chain, each public key (and therefore signature) in the sequence can only be created with the knowledge of the previous public key in the sequence, thus enforcing an order.

In a variant of this method, the entries in the table could each be transactions in their own right.

METHOD 2.2: CHAIN OF r-PUZZLES. An R-puzzle is a recently disclosed form of challenge and proof. It is based in the r-part of an ECDSA signature $(S, R)$, and provides a way to prove knowledge of a secret without revealing that secret. See https://www.youtube.com/watch?v=9EHKvNuRc0A&t=978s and https://www.youtube.com/watch?v=CqqTCsLzbEA.

An ECDSA (elliptic curve digital signature algorithm) signature consists of the combination $(S, R)$ where R is the x-coordinate of the public part of the ephemeral keypair. It is possible to use the same public key for each signature but chain together the ephemeral keys. This would give the sequence shown in Figure 11. This may be included in the transaction payload $(data)$ either as an alternative to, or in addition to, any of the above methods.

Here $R_1$ is a random ephemeral key and $<S_1, R_{1i}>(H(D_i))$ means the data $H(D_i)$ signed with $P_1$ using ephemeral key $R_{1i}$.

In general any of methods 1.1, 1.2, 2.2 and/or 2.2, and/or others, may be used individually or in conjunction to indicate the order amongst a set of data items Din the payload $(data)$ of a transaction.

DISTRIBUTED CASE: The above has been described in a scenario where the order-attestation service is provided by an individual node 702A. It is also possible to provide such a service through multiple attestation nodes 702A.

Consider for example a situation with a distributed attestation service that uses a layered network 700 to achieve consensus. In this case more than one of the intermediate layer nodes 702 (e.g. layer 2 nodes) in Figure 7 will take the role of attestation nodes.

Assume that the majority of attestation nodes 702A act honestly and would like to achieve a consensus for ordering and timestamping of the data propagated around a community (as defined earlier) that is made up of the attestation service nodes 702A and the users 703C. Assume that there are N independent attestation service nodes 703A that are connected to the same subset of m core mining nodes 701 and therefore define a community of the layered network 700. The fact that there are multiple intermediate layer (e.g. layer 2) attestation nodes 702A allows for many users in the outer layer(s) (e.g. layer 3) to connect to a node 702 in an intermediate layer (e.g. layer 2) without the load being too high (too many connections) for the intermediate layer nodes.

The issue to address then, in such as distributed case, is how the intermediate-layer attestation nodes 702A (e.g. layer 2 nodes) can agree to a consensus in the ordering of, for example, two data items $D_1$, $D_2$ submitted by two users even if they arrive in a different order at one attestation node 702A compared to another.

One method for addressing this is to use threshold signatures, i.e. where at least $M$ different signatures *(M>1)* are needed to unlock a transaction Txrather than just one, as discussed previously. Consider an M-of- $N$ threshold signature system as described applied to the attestation service nodes 702A. This means that there are N participating nodes with private keyshares $a_1$, $a_2$, .., $a_N$. Any subgroup of M participants can produce signature shares that combine to give a signature of a message that will unlock the preceding transaction in the series.

Suppose one of the attestation service nodes 702A produces a candidate transaction $Tx_1$ containing the OP_REUTRN payload $data_1$ that is an ordered list of all data elements Dit has received in the chosen time period. This node may broadcast the candidate transaction to all other attestation service nodes 702A (or at least some of them) and ask for their signature shares to sign the transaction. If they receive at least M signature shares (including their own) then the transaction may be submitted to the blockchain network 106 and mined into a block 151. This ensures that an ordering of the data elements is agreed by at least *M-of-N* timestamping services in the distributed network.

How is a single attestation node 702A chosen to create at transaction? The above has assumed that there is just one attestation service node 702A that has created a candidate transaction $Tx_1$ and that the other attestation nodes 702A are OK with this. But what about the next candidate transaction? There are at least two options: (i) there is always one privileged attestation node 702A that creates candidate transactions, or (ii) after each transaction is created then one of the attestation nodes 702A is chosen at random to be the next node to create the next transaction. This could be a random sequence determined in advance, or it could be a deterministically random choice based a seed relating to the transaction $Tx_1$ that has just been submitted. For example, the seed may be taken to be the $Tx_1$. Other distributed arbitration algorithms for distributed computing may also be possible.

## DISTRIBUTED DATABASE

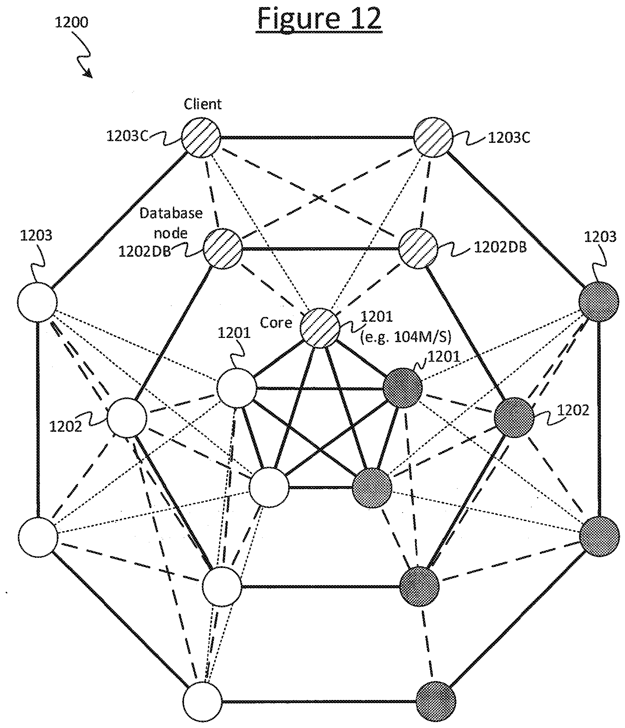

Figure 12 shows an example of a distributed database implemented in a layered network 1200 in accordance with embodiments disclosed herein.

The layered network 1200 comprises: a core network comprising one or more core nodes 1201; at least one intermediate layer around the core, each intermediate layer comprising one or more intermediate layer nodes 1202; and at least one outer layer around the outermost of the intermediate layers, each outer layer comprising one or more outer layer nodes 1203. Again the term "outer" in "outer layer" here does not necessarily limit to outermost, though that is one possibility. The layered network 1200 may be an overlay network overlaid on an underlying physical or infrastructure network such as the Internet, or alternatively may be a standalone network such as a dedicated and/or internal (e.g. private) network within an organization.

The core nodes 1201 are nodes 104 of the blockchain network 106. They may comprise mining nodes 104M, storage nodes 104S, or a combination thereof. In embodiments each of the core nodes is a mining node 104M and/or storage node 104S (e.g. full copy node).

In some cases, some of the intermediate layer nodes 1202 and/or outer layer nodes 1203 may comprise periphery nodes 104 of the block chain network 106, e.g. nodes other than mining nodes 104M and/or storage nodes 104S such as forwarding nodes 104F. Alternatively, they may comprise nodes that do not have any role in the blockchain network 106 (mining, storage or forwarding) other than as a client of the blockchain network 106.

The intermediate nodes 1202 comprise a plurality of database nodes 1202DB across one or more intermediate layers of the layered network 1200. These database nodes 1202DB are configured to store a distributed database whereby each database node 1202DB stores at least part of the overall database comprising one or more database entries. In embodiments entries are replicated across more than one node, such that at least some entries are duplicated across more than one database node 1202DB. In some cases each database node 1202DB could store a copy of the whole database; but in other embodiments each database node 1202DB stores only a part of the database, and each entry may be replicated over only some but not all of the database nodes 1202DB (distributed such that the database nodes 1202DB between them store the whole database).

Each database node 1202DB may take the form of a server comprising one or more physical server units. Each such node comprises memory comprising one or more memory units and processing apparatus comprising one or more processing units. These may for example take any of the forms of memory medium and/processor as those discussed previously in relation to other network elements. As well as the database entries themselves, the memory stores database software arranged to run on the processing apparatus of the attestation node. This software is configured so as when run to provide a database service that operates in accordance with any of the embodiments described below or similar.

In embodiments, the identity of each database node 1202DB may be certified by a certificate authority, to enable the client node(s) 1203C, core nodes 1201 and/or other database nodes 1202DB or other intermediate layer nodes (such as attestations service nodes 702A or smart contract nodes) to verify the identity of the database node 1202DB. Interaction between such nodes may be conditional on the verification. E.g. a client node 1203C may only send update requests to a database node 1202DB on condition of verifying its identity based on the certification. Alternatively or additionally, node versioning may be used as an alternative mechanism for node identification in an overlay network.

Each of the client nodes 1203C may be an end-user node, comprising the computer equipment of a user of the service. Again this could be an individual user or an organization such as a company, academic institution, or government institution, etc. Hence each client node may comprise one or more user terminals and/or a server comprising one or more server units at one or more sites. Each client node comprises memory comprising one or more memory units, and processing apparatus comprising one or more processing units. These may for example take any of the forms of memory medium and/processor as those discussed previously in relation to other network elements or user equipment. The memory stores client software arranged to run on the processing apparatus, wherein the client software is configured so as when run to operate the node as a client of the distributed database provided by the database service provided by the database nodes 1202DB in accordance with any of the following embodiments or similar. Optionally, one or more of the transmitting end-user nodes may comprise the user equipment 103 of a user 102 of the blockchain network 106, and the client software may comprise a blockchain wallet application 105 or the like.

In embodiments, the identity of each client node 1203C may be certified by a certificate authority, to enable the database nodes 1202DB, other intermediate layer nodes (such as attestations service nodes 702A or smart contract nodes), core nodes 1201 and/or other client nodes 1203C or to verify the identity of the client node 1203C. Interaction between such nodes may be conditional on the verification. E.g. a database node 1202DB may only accept update requests from a client node 1203C on condition of verifying its identity based on the certification. Alternatively or additionally, node versioning may be used as an alternative mechanism for node identification in an overlay network.

In embodiments, the layered network 1200 may be configured in accordance with any of the protocol rules or structural features described in relation to Figures 3 to 6 and/or 7. The nodes 1201, 1202, 1203 are configured to form connections between one another, at the overlay network level in the case where the layered network 1200 is an overlay network overlaid on an underlying infrastructure network such as the Internet. That is, the nodes 1201, 1202, 1203 of the layered network are configured to obey an overlay network protocol which specifies what connections they can and cannot form with other nodes 1201, 1202, 1203 of the layered network.

For example, in embodiments each intermediate layer node 1202 is connected to at least one core node 1201 (blockchain network node 104) in the core network. The core network comprises at least part of the blockchain network 106. In embodiments the core network, in itself, may be a complete network (i.e. complete graph). Each outer layer node 1203 may be connected to a least one of the intermediate layer nodes in at least one intermediate layer. In embodiments each outer layer node 1203 also has at least one connection to at least one core node 1201 (i.e. to the blockchain network). In some such embodiments, one or more of the outer layer nodes 1203 each have connections to more than one - but not all - of the core nodes 1201. In embodiments the layered network 1200 as a whole may be a non-complete network, i.e. not every node 1201, 1202, 1203 has a connection to every other at the overlay network level. In embodiments each node within a given layer may be connected to at least one other node in the same layer. E.g. each node 1202 in an intermediate layer may be connected to one or more others in the same intermediate layer, and/or each node 1203 in an outer layer may be connected to one or more others in the same outer layer. In embodiments connections may also be formed between different intermediate layer nodes 1202 in different intermediate layers, and/or different outer layer nodes 1203 in different outer layers.

A connection between two nodes 1201/1202/1203 of the layered network 1200 means those nodes can communicate directly, which in this context means without having to perform a hop via another node 1201/1202/1203 of the layered network 1200. In the context of an overlay network, a "connection" means a connection (i.e. edge) at the level of the overlay network (i.e. the level of the overlay network protocol of the layered network).

Only two client nodes 1203C and two database nodes 1202DB are shown in Figure 12 simplicity of illustration, but it will be appreciated that there may be more. In embodiments, the client nodes 1203C and database nodes 1202DB may be part of the same community as one another.

The client nodes 1203C are clients at least in that they are clients of the database service. In embodiments the client software run on one or more of the client nodes 1203C may be further configured to operate its node 1203C as a client of one or more additional services provided by one or more second layer nodes 1202, e.g. an ordering attestation service or smart-contract service. And/or, it may be configured to operate its node 1203C as a client of one or more core nodes 1201 (e.g. 104M, 104S) of the blockchain network 106, such as to be able to query the blockchain 150. Also the fact that the client nodes 1203C are described as clients of the database service (and optionally one or more other services) does not exclude the possibility that these nodes may themselves also be servers of one or more further services to one or more further entities (not shown). E.g. a client node 1203C could comprise computer equipment of a company who provides online services to customers over the web.

In some embodiments the layered network 1200 of Figure 12 may be the layered network 300 of Figure 3 or 4, in which case the outer layer nodes 1203 of Figure 12 are the third layer nodes 303 of Figure 3 or 4, the intermediate layer nodes 1202 of Figure 12 are the second layer nodes 302 of Figure 3 or 4, and the core nodes 1201 of Figure 12 are the core nodes 401 of Figure 3 or 4.

In some embodiments the layered network 1200 of Figure 12 may be the layered network 700 of Figure 7, in which case the outer layer nodes 1203 of Figure 12 are the outer layer nodes 703 of Figure 7, the intermediate layer nodes 1202 of Figure 12 are the intermediate layer nodes 702 of Figure 7, and the core nodes 1201 of Figure 12 are the core nodes 701 of Figure 7. In such embodiments, the attestation service of the attestation nodes 702A may be integrated into some or all of the same intermediate layer nodes 702/1202 as the database nodes 1202DB, and/or the attestation nodes 702A may comprise separate intermediate layer nodes 702/1202 in the same and/or different intermediate layers in the same and/or different communities.

In operation, a database node 1202DB receives update requests from one or more of the client nodes 1203C. Multiple update requests could be received from the same client node 1203C and/or different client nodes 1203C. In embodiments each update request may be received directly over one of the layered network connections between the relevant outer and intermediate layers (e.g. layer 2 and layer 3), between the requesting client node 1203C and the receiving database node 1202DB. Alternatively the update request may be received indirectly via more than one hop, such as by being forwarded from another of the database nodes 1202DB which was the immediate recipient of the request from the originating client node 1203C (see below). In the indirect case messages may be propagated via the connections within the layered network 1202 between intermediate layer nodes 1202 (in the same and/or different intermediate layers) Each update request is a request to update a particular respective target entry in the database. For each such request, the receiving database node 1202DB determines whether the request is destined for the receiving database node 1202DB itself, or another of the database nodes 1202DB - i.e. is the respective target entry which the requests seeks to modify found in the part of the database stored locally at the receiving database node 1202DB or another database node 1202DB. Note that in the case where data entries are replicated across multiple database nodes 1202DB, the target entry could be found in both the receiving database node 1202DB and one or more others. It is also possible that the request is destined for multiple other database nodes other than the receiving database node.

Each update request contains data content, i.e. the actual update to be made. This could be expressed in absolute terms, i.e. replacement data to replace some or all of the existing content of the target entry. Alternatively the content of the update could be expressed in the request as a delta (difference), i.e. a modification to apply to the respective target entry. The data content may comprise a full version of the ultimate user data that the user wishes to store, or it may instead take the form of a fingerprint or compressed version of the user data rather than the full version itself explicitly. Either way, if the update is destined for the receiving database node 1202DB, then the receiving database node applies the requested update locally at the copy of the relevant target entry stored locally on the receiving node 1202DB; or if it is destined for one or more other of the database nodes 1202DB, the receiving database node 1202DB forwards the update request to the relevant database node(s) 1202DB to be applied to the copy of the target entry stored there. Note again that in the case where entries are replicated across database nodes 1202DB, both could be done. Where required, updates can be propagated between database nodes 1202DB over the connections within an intermediate layer and/or between different intermediate layers.

Note also that a client node 1203C could send an update request to each of a plurality of receiving database nodes 1202DB, in which case each receiving database node 1202DB may behave as set out above.

In addition to being recorded at one or more database nodes 1202DB, in accordance with the present disclosure an indication of each update request is also recorded on the blockchain 150 via one of the connections to the core 1201. This helps build consensus amongst nodes of the network such as to improve consistency amongst database nodes 1202DB.

The indication of the update is sent in a transaction 152 to one of the core nodes 1201 to be mined into a block 151 and thus recorded on the blockchain. This may be sent by the requesting client node 1203C. In this case one or more of the database nodes 1202DB will query the blockchain 150 (or a miner's mempool 154) to check that the requested update has been recorded on chain (or accepted into the mempool 154). The database node 1202DB in question will only apply the update if it confirms this. The check may be performed directly over a connection within the layered network 1200 between the database node 1202DB and one or more of the core nodes 1201, or alternatively vicariously via more than one hop.

In another scenario, the transaction including the indication of the update may be sent to the core 1201 by one of the database nodes 1202DB in response to receiving the update request. In this case, the requesting client node 1203C (or even a third party node) may check that the expected update has been recorded on the blockchain (or accepted into a miner's mempool 154). This check may be performed directly over a connection within the layered network 1200 between the client node 1203C and one or more of the core nodes 1201, or alternatively vicariously via more than one hop.

In further alternatives, the transaction including the indication of the update may be sent to the core 1201 by a third party service in one of the intermediate layers, e.g. the attestation service 702A or similar. This may be sent directly or vicariously. The requesting client node 1203C and/or one or more of the database nodes 1202DB may check that the expected update has been recorded on chain (or accepted into a mempool 154). Again this check may be performed directly (a single hop) or vicariously (more than one hop)

The "indication" of the update to be recorded on chain may or may not comprise the actual content of the update itself explicitly (either in absolute terms or a delta). As an alternative, or in addition, it may comprise a transformation of the update such as a hash of a preimage, wherein the preimage comprises the update. This may be referred to as a "hash commit". In the case where only a hash commit or such like is recorded, this enables a node to check that a known update has been recorded on chain (or accepted into a miner's mempool 154), but a third party that does not have knowledge of the update would not be able to view it. The hash may also be smaller to store than the content itself.

In one advantageous arrangement, if a database node 1202DB temporarily becomes disconnected from the layered network 1200, then it can use the record stored on the blockchain 150 to check for any relevant updates and make that/those updates when it comes back online. Again this check may be performed directly over a connection within the layered network 1200 between the database node 1202DB in question and one or more of the core nodes 1201, or indirectly via more than one hop.

For instance, this may be used to address the potential issue of "zombie records", which is a term known in the art. In some distributed databases, when a node is disconnected it may miss an update in the form of a deletion. If all the other nodes have completely expunged the deleted entry by the time the disconnected node reconnects, then that node may re-propagate the deleted data as if it were a new entry to be added to the database. However, by keeping a record of the deletion stored on chain, this can be avoided. In another advantageous scenario, the record on chain can be used to provide a "hinted handoff". Hinted handoff is a term of art. "Handoff" here means providing an update to a database node when it reconnects after a period of being disconnected, and the hint comprises an ID of the database node or nodes to which the update is to be directed (i.e. which store the part of the database that includes the relevant entry or entries). It may also include other fields. Say a database node 1202DB receives an update request which needs to be propagated to another database node 1202DB, but that other database node 1202DB is currently disconnected from the layered network 1200. Conventionally the receiving database node 1202DB may have to store the update including the hint until the other database node 1202DB comes back online. However, by instead recording the hint on-chain, the receiving database node 1202DB does not need to do this.

Another example of an indication that may alternatively or additionally be stored on chain is ordering information. In some scenarios, multiple update requests requesting to update the same target entry may be received at the same database node 1202DB storing that entry. To accommodate this, the database node 1202DB may be configured to apply the updates to the target entry in a specified order. In some embodiments, the specified order could be based on a time of receipt at the receiving database node 1202DB, or a timestamp added by the sending client node 1203C or a forwarding database node 1202DB (e.g. the time of receipt at the database node 1202DB which originally received the request direct from the sending client 1203C). Alternatively, the specified order could be asserted in one or more of the update requests from the client, or in a message from another intermediate layer node 1202 such as another of the database nodes 1202DB or an attestation service node 702A, or from the core 1201. E.g. the order could be asserted in the form of an ordered list of the multiple updates, or an index of the order mapped to each update request.

In embodiments, the specified order may be recorded on the blockchain 150, e.g. by the attestation service 702A discussed previously. In such embodiments, the client node 1203C making the requests may obtain an order from the attestation service 702A and submit this to the database node 1202DB. In this case, as well as recording the order on the blockchain 150, the order attestation service 702 also returns a message comprising the specified order to the requesting client node 1203C (which is also a client 703C of the attestation service 702A). When the client 1203C makes the update requests to the database node 1202DB, it also submits the order it obtained from the attestation service 702A in at least one of the update requests to the database node 1202DB. The database node 1202DB checks this against the order recorded on the blockchain (or in a miner's mempool 154) and then applies the updates in the specified order on condition that the order submitted by the client 1203C matches the order recorded on chain 150. The check may be conducted directly via the connection between the database node 1202DB and the core 1201, or alternatively via more than one hop.

Alternatively the database node 1202DB making the updates could read the order directly from the blockchain 150 and apply the order as read from the blockchain 150 (or miner's mempool 154).

In another variant, the attestation service 702A could be integrated into one or more of the database nodes 1202DB. In this case one of the database nodes 1202DB takes responsibility for determining the order (and optionally adding the timestamps), and recording this on the blockchain 150. The database node 1202DB responsible for the order may propagate the specified order to other database nodes 1202DB around the connections between nodes in the intermediate layer(s). The other database nodes 1202DB may check this against the order recorded in the blockchain, or alternatively may read the order directly from the blockchain 150 (or in a miner's mempool 154). This may be conducted directly via the connection between the database node 1202DB and the core 1202, or alternatively via more than one hop.

Ordering information is particularly (but not exclusively) useful in scenarios where different update request experience different delays in being propagated throughout the intermediate layer(s) of the layered network 1200. For instance, consider a scenario where a first update request is issued by its respective client node 1203C earlier than a second update request from another client node 1203C, but the second update request arrives at a database node 1202DB storing the target entry later than the first. E.g. this could occur because the first update request has to traverse a firewall that the second does not, and/or because it is sent from a geographically further away location. The use of the ordering information in accordance with embodiments herein may be used to address such situations to ensure the updates are applied in the order they were issued, or the order they were first received by their immediate database nodes 1202DB to which they were originally submitted.

Note however that this is not essential. More generally, as long as a consensus as to some definitive order is reached, then it is not essential that the order is the order of issue or first receipt. As long as some definitive order is agreed then any given entry of the distributed database will (at least eventually) have a definitive state, and this order can be independently re-derived and verified by any of the database nodes (or client nodes) in a consistent manner.

To illustrate some of the principles behind the disclosed scheme, a particular implementation will now be described by way of example. By way of illustration reference will be made to database nodes being implemented in layer 2 and client (user) nodes in layer 3, but this could be generalised to any intermediate and outer layers respectively.

One reason to use a layered network is that the nodes in layer 2 should preferably store consistent data but may not all be directly connected to one-another. Consistency of the data is related to the order in which data and commands are sent and received, and hence how data is transformed with the data store. For example, if there are two requests to perform a non-commutative operation on a data element, e.g. matrix multiplication from the left, then the order is important. In another example, one request may be to delete a file and the other to read a file. Again, the order these requests are received matters. In order to stop disputes it would be desirable to define an ordering to data insertions. This can be achieved by the blockchain as a central coordinator

An incentive for transaction and data propagation may be provided by a service level agreement. Database nodes would propagate transactions around the community, such as to propagate data and transactions around layer 2, so that the database is consistent. This may be a requirement to honour their service level agreement. Users of the data may propagate it around layer 3 and include the transaction and a Merkle proof as attestation to authenticity and immutability.

Layer 2 nodes may be issued a digital certificate. Users in layer 3 nodes may also be given a digital certificate. There could be a whole PKI (public key infrastructure) going down the layers, which could be on the blockchain using a UTXO for PKI concept.

By way of comparison, reference is made to a distributed database implemented in a non-layered network, which does not employ a blockchain nor have a core of blockchain network nodes. An example of such a comparative database is the existing Cassandra database.

In conventional database theory, the *CAP* theorem (or Brewer's theorem) states that it is only possible to achieve two of the three key desirable properties of a database system:

- *Consistency* - data read from the database always corresponds to the most recent write;
- *Availability* - data can always be read from the database upon request; and
- *Partition tolerance* - the system continuous to operate in the event of network partition. The presently disclosed scheme can be used to address this trilemma.

The Cassandra database management system is a high-availability, partition-tolerant database architecture satisfying two of three aspects of the CAP theorem but sacrificing the consistency of data.

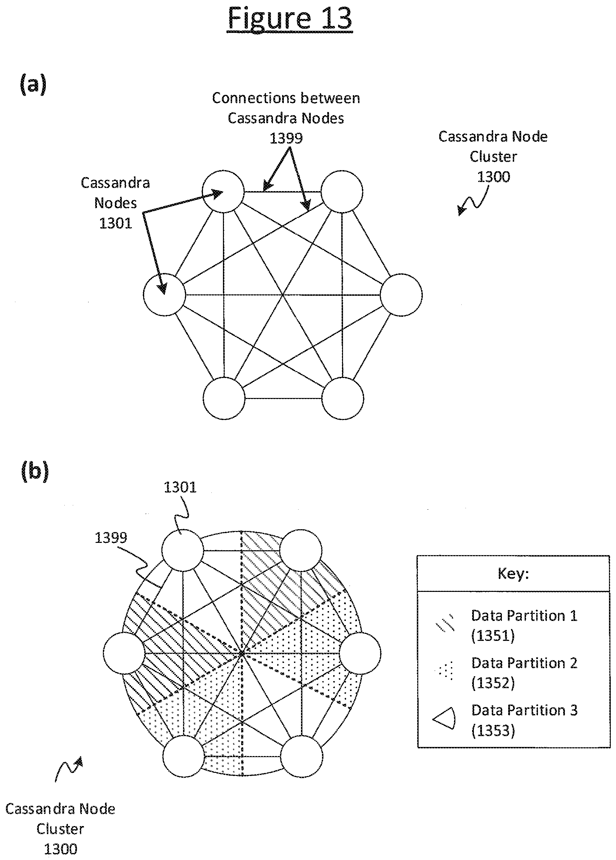

The basic architecture of a Cassandra database system is a distributed set of *nodes* that store indexed data as part of a Cassandra node cluster. In the cluster, all nodes are considered equivalent and there is no distinction between 'slave' and 'master' nodes as in other distributed systems. As a result, Cassandra nodes in a cluster form a *complete graph,* where all nodes are able to identify and communicate with all other nodes in the network. This architecture is shown in Figure 13(a). This shows a Cassandra node cluster 1300 with Cassandra network connections 1399 between every pair of Cassandra nodes 1301.

The data to be stored in the database is partitioned amongst the nodes, and will generally be replicated by a multiplicity of nodes to allow high-availability and resistance to partition of the network of nodes, as shown in Figure 13(b). This shows three example data partitions: Data Partition 1 (1301), Data Partition 2 (1352) and Data Partition 3 (1353).

The number of Cassandra nodes at which a data item is replicated is known as the *replication factor* of the cluster. A replication factor of 3 means that each data item is replicated in three nodes on the network.

The consistency of the data stored amongst the nodes of a Cassandra cluster is effectively the probability that data returned by a node in response to a read request is in fact the version of the requested data most recently written to Cassandra cluster. The consistency level of the Cassandra cluster can be set for read and write operations, and can be configured to meet the demands of a specific use case.

This present disclosure introduces new methods to improve the processes used to achieve higher consistency in Cassandra database, which usually sacrifices consistency for performance by design.

**Datacentres and Clusters:** The Cassandra architecture uses two definitions relating to multiplicities of nodes:

- *Datacentre - a* collection of related nodes, which may be a physical or virtual collection. A single datacentre may be used to maintain a complete copy of the database, and may be housed in a single geographical location.
- *Cluster - a* cluster is the collection of datacentres that relate to a Cassandra database. The cluster may span multiple physical locations.

It will been seen later that datacentres and clusters can be replicated using the network structure of a layered network with a core of blockchain network nodes.

**Write and Read Paths:** In a Cassandra database system, there are generally two ways in which nodes may communicate, termed *inter-node communications.* These are:

- *Direct communication -* in general it is possible for each node in a Cassandra cluster to communicate with each other node. This is the basis for considering a Cassandra cluster to be a complete graph. The messages sent directly between any pair of nodes in this manner relate to *write requests* and *read requests.*
- *Gossip protocol -* a peer-to-peer communication protocol used by Cassandra nodes to exchange state messages. Messages are gossiped once per second between a node and up to three other nodes in the cluster. This is used to communicate node state and thus allow *failure detection* of nodes that are compromised or unreachable.

When a client uses a Cassandra cluster to read or write data, the client may choose to communicate with any node in the cluster, as they are treated indiscriminately. The node chosen by the client becomes a *coordinator* node for performing the particular read or write request being made by the client.

This entails the coordinator using the client's request to identify which nodes in the cluster need to be written to/read from, and fetching data from or writing data to those nodes accordingly.

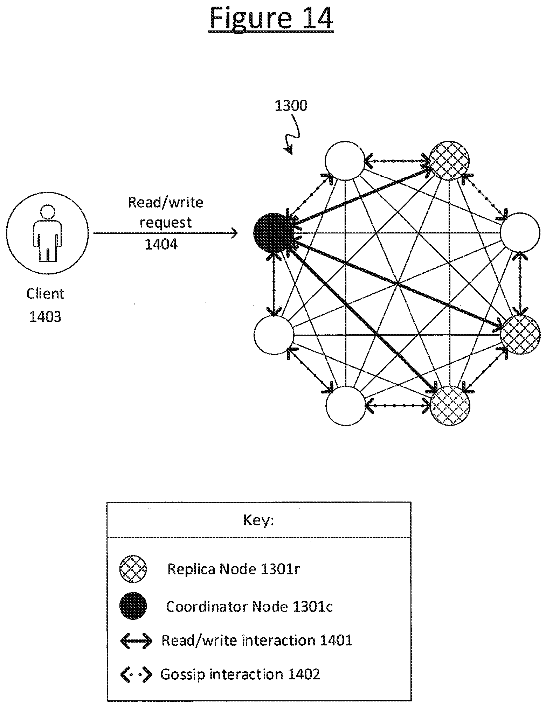

Figure 14 shows the different communication pathways of a Cassandra cluster graph. Nodes communicate state messages via Gossip (dotted lines, 1402) and communicate write/read requests via Direct communication (bold solid lines, 1401). Figure 14 shows the client 1403 sending a read or write request 1404 to a coordinator node 1301c (solid black), and Gossip messages from the coordinator 1301c to a plurality of replica nodes 1301r (cross hatched).

**Logging & Writing Data:** At a high level, the hardware components of a Cassandra node 1301 include:

- *Disk:*

   ∘Commit Log - the append-only log of all mutations made to the Cassandra node.
   ∘ SSTable - an immutable data file used to persist data on disk in a Cassandra node.

- *Memory:*

   ∘ Memtable - the in-memory structure where a Cassandra node buffers data from a write request.

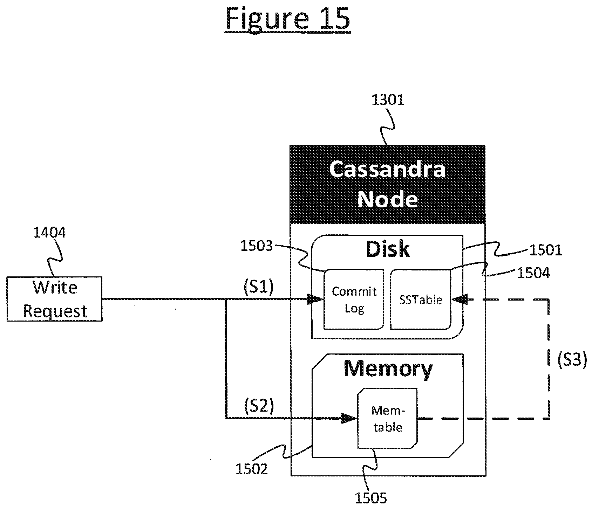

These components of a Cassandra node interact during the *write path* that is executed when a node receives a write request from a coordinator node, as shown in Figure 15. The Cassandra node 1301 comprises: a disk 1501 comprising a commit log 1503 and an SSTable 1504, and a memory 1502 comprising a Memtable 1505.

The process in Figure 15, detailing a write request serviced by a node 1301, is as follows:

   (S1) Record write request (mutation) in the commit log 1503.
   (S2) Store write data blob and index in memory 1502.
   (S3) Flush data and index from memory to disk 1501.

The importance of this interaction relates to the fact that the Cassandra database system is an AP (availability, partition-tolerant) database, and sacrifices consistency according to the CAP theorem.

As an AP system, a Cassandra database relies on an *eventual consistency* model. This means that the database will reflect the most recent mutations at some time after the mutations are made. The assumption in achieving eventual consistency is that the order of operations for each mutation made to a node in the cluster is recorded and maintained. This is done using the on-disk commit log to ensure that mutations to the data stored in the SSTable are done in the correct order.

The present disclosure introduces methods for improving the process by which the use of a layered network with blockchain-node core can improve the mechanism for reaching eventual consistency. Examples will be discussed in more detail later.

Deletion of Data: the deletion of data from a Cassandra database node uses the following techniques in conjunction:

- *Upserts* - a Cassandra database treats deletion as a type of insertion (an 'upsertion') where a new version of the data is inserted but with a more recent timestamp.
- *Tombstones* - in the case of deletion, the new record written is called a tombstone, which is simply a deletion marker for that data. A tombstone marker has a built-in expiration time, after which the data is deleted by compaction.
- *Compaction* - the process of compaction is the mechanism for deleting data that has been marked with a tombstone. This involves taking all existing versions of the row of data in question, deleting all but the most recently timestamped version and
- *Time-to-live* (TTL) - a marker which can be added to data as an upsert, which signifies the time at which a data row is to be marked with a tombstone, and deleted accordingly.

There is a known issue inherent to the distributed replication model of Cassandra known as *zombie* records. In the event that a node is unreachable during the deletion (i.e. tombstone and compaction) of a row of data, when that node re-joins the cluster it will treat the record as new and attempt to forward it to other replica nodes. Because the other replica nodes, which were online during the record's deletion, have already deleted the record it is known as a zombie record.

Embodiments described herein provide a method for mitigating the possibility of zombie records in a distributed database system. An example will be discussed in more detail later.

**Write repair: repair during write path (hinted handoff). In** the event that one (or more) of the replica nodes at which a data write is to be performed is unreachable, the coordinator node for that write request may store a local copy of the missed write data as a *hinted handoff.* A hinted handoff includes:

- Node ID of the unreachable node;
- Hint ID acting as a timestamp for the data;
- Message ID identifying the Cassandra version; and
- The data blob of the data to be written.

When the unreachable node (identified by Node ID) comes back online the coordinator is responsible for replaying the hint to that node and effectively forwarding the write request to it after the fact. This means that a burden, both in disk space and processing, is necessarily placed on the coordinator for updating unreachable nodes when they re-join the network.

Embodiments disclosed herein use a layered network with blockchain node core to improve this repair process by reducing burden on coordinator. Examples will be discussed in more detail later.

**Integrating a distributed database into a layered network:** the present disclosure provides a modification relative to a Cassandra type database system or such like, such that the distributed database becomes a part of a layered network 1200 with a cluster of blockchain network 1201/104 nodes at its core. The structure comprises at least the following layers:

- Blockchain core layer (i = 1) - the innermost layer of the layered network, preferably exclusively comprising blockchain network peers 104 forming a complete graph.
- Database node layer (i = 2) - a layer comprising the nodes of a distributed database cluster, which do not form a complete graph (e.g. this could be a database cluster of an over-the-top, OTT, content provider).
- User/client layer (i = 3) - a layer comprising the users of a system or application that is underpinned by the distributed database (e.g. users of the OTT service).

For convenience a network of this type may be referred to herein as a "blockchain layered network", BLN.

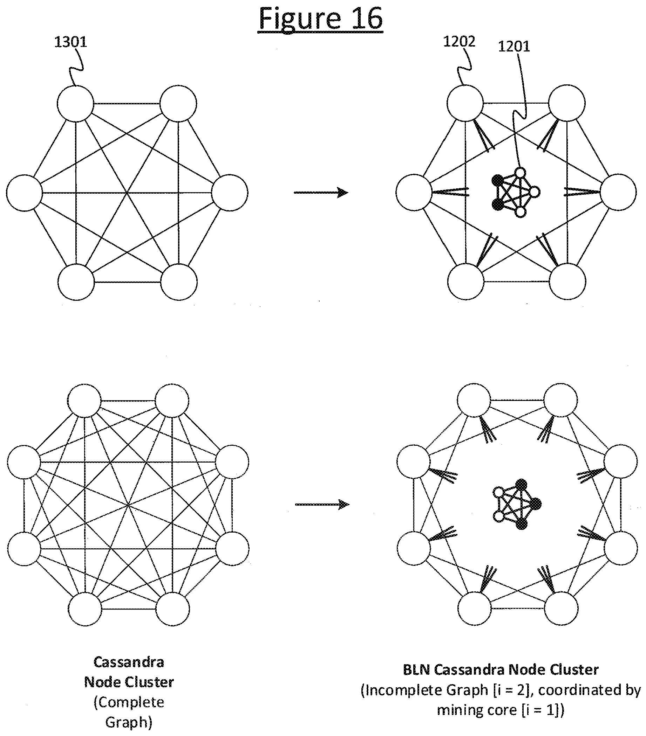

Figure 16 depicts how an otherwise traditional cluster can be integrated to form a BLN, by removing intra-shell connections (breaking the completeness of the intra-shell graph) and introducing connections from the database nodes to blockchain core ancestor nodes.

The figure depicts this transformation for two distinct clusters of different size, and does not show the outer user layer for simplicity.

Figure 16 shows two examples of the integration of a complete (e.g. Cassandra) node clusters (left hand side) into a BLN (right hand side). On the LHS, the nodes form complete graphs. On the RHS, the nodes form a sparser graph layer (i > 1) that is coordinated by the blockchain network central core (i = 1) by virtue of connections from database nodes to their set of BLN core ancestors.

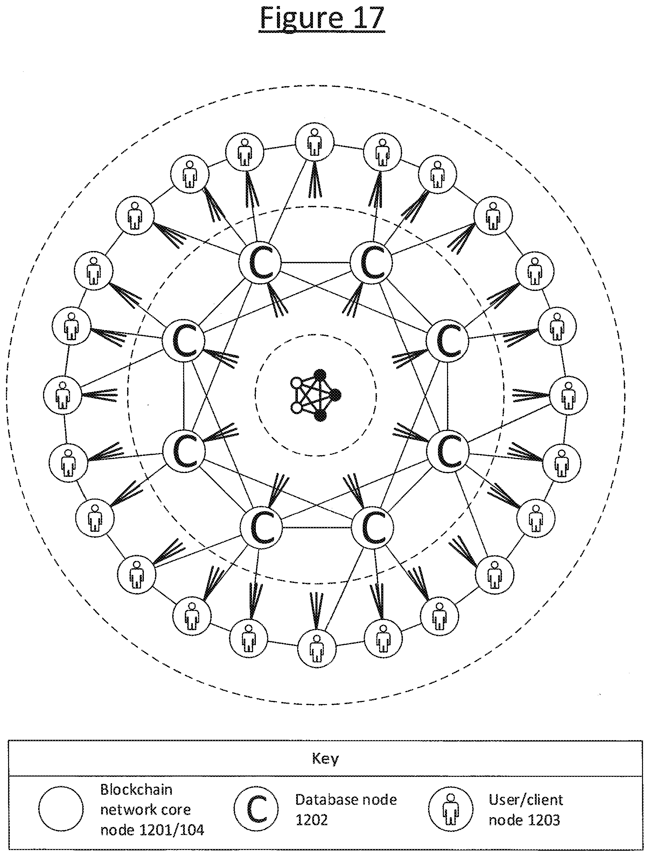

An example of a full BLN, which includes all three layers of the network, is shown in Figure 17. The phrase BLN-implemented distributed database (BLNiDD) may be used herein to refer generally to a BLN in which a cluster of distributed database nodes constitutes one of the intermediate layers around the core.

In certain embodiments, the following prescriptions may be made about the behaviour of Cassandra nodes in the i = 2 layer of a BLN:

- Database nodes are able to use the same Gossip protocol, or the like, for state messages.
- Database nodes may also propagate *transaction messages* amongst them using the same Gossip protocol, or such like.
- Database nodes may use direct communication of write and read requests for pairs of nodes which are directly connected in i = 2.

**Communities in a BLNiDD:** the existing definitions of a datacentre and cluster in the Cassandra architecture may be applied to a BLNiDD. A datacentre is simply the set of database nodes belonging to a single *community* of a BLNiDD, whereas the cluster itself is the *entire layer (i* = 2) of database nodes from all communities in the BLNiDD.

**Public Key Infrastructure:** it may be desirable to ensure that communications between nodes in the database node cluster (i = 2) and users (also nodes in the BLN graph, i = 3) are trusted to improve reliability. This can be achieved by implementing network-wide *Public Key Infrastructure* (PKI) for the BLN.

A PKI implementation for a BLN, which includes a database cluster and its users, may comprise:

- **User PKI (i = 3):**

  ◦ Assignment of user public keys $P_1^U, P_2^U, ..., P_{n_3}^U$ to the $n_3$ users of the database, which may be assigned by an administrator of the database (i.e. a DBA).
  ◦ Certification of user public keys by the database administrator as a trusted certificate authority (CA) for the database.

- **Cassandra node PKI (i = 2):**

  ◦ Assignment of database node public keys $P_1^C, P_2^C, ..., P_{n_2}^C$ for the $n_2$ nodes forming the database node cluster, which may also be issued by the DBA.
  ◦ Certification of database node public keys by the database administrator as a trusted CA for the database.

- **Bitcoin core PKI (i = 1):**

  ◦ The BLN for a distributed data storage and retrieval system may leverage an existing (pseudo-)PKI of the blockchain core network, such as the MinerID system.
  ◦ The blockchain core network nodes to which both the databse cluster nodes and the users of the database are connected may be public entities that may be identified and registered as business/service providers.

As an extension of the above, it may also be possible to implement both the user PKI and database node PKI aspects entirely on-chain. The blockchain network core PKI, using the MinerID system, is also on-chain which would mean that the entire PKI implementation for this BLN architecture could feasibly be implemented on-chain. The Miner ID system is disclosed for example in https://www.youtube.com/watch?v=ZSfT_WtBmyQ&feature=emb_title.

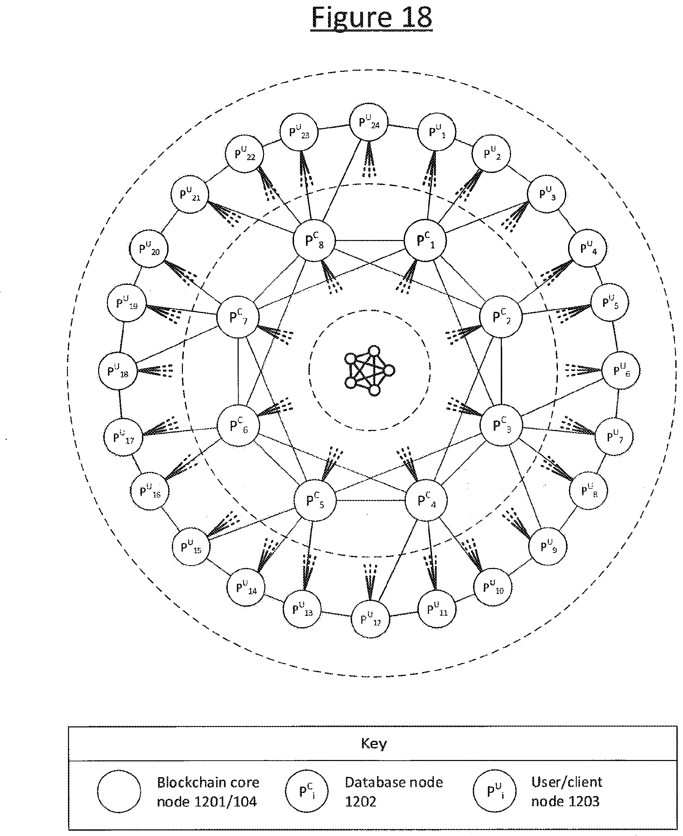

Figure 18 shows an example of a BLN implemented distributed database with PKI implemented in at least layers i = 2,3.

**Example Methods:** the blockchain may be used to facilitate a more robust, auditable, verifiable mechanism for reaching the *eventual consistency* compared to a Cassandra database or the like. This can be done by integrating a database cluster into a BLN, as described above. For any of the following methods, use may also be made of:

- PKI for the layers of the BLN, and/or
- The method for ordering timestamped events.

In the methods that follow, there are outlined a number of ways to use the blockchain, and more specifically a BLN built upon its core network, to improve distributed database systems by solving a number of separate but related problems.

**Method 1 - Use of a BLN to improve eventual consistency and/or mitigate zombies.** A Cassandra database is an AP system, which means it sacrifices consistency of data according to the CAP theorem, and instead uses an eventual consistency mechanism. The order of operations is important in doing this, and failures can result in zombie records propagating through the database.

In a multi-node cluster, different database nodes may store replicas of the same data. If a node receives a delete request for data it stores locally, the node tombstones the specified database entry and also tries to forward the tombstone to other nodes containing replicas of the same record. But if one replica node is unreachable at that time, it will not receive the tombstone immediately, so it still contains the version of the record from before the delete operation. If the "tombstoned" record has already been deleted from the rest of the cluster before that node recovers, then the entry in question on the now-recovered node may be treated as new data when it comes back online, and thus may be propagated it to the rest of the cluster as a new addition. This is referred to as a zombie record.

To address such issues or the like, a BLNiDD may be used instead of a simple Cassandra system to leverage the blockchain core network as a central coordinator for determining the order of operations that lead to eventual consistency. The order becomes immutable and publicly verifiable. Database nodes in layer i = 2 propagate all state mutations with hashes of data blobs using Gossip (or other such protocol), rather than direct communication.

In other words, the order of operations may be important and it may be desired to reach accurate state of eventual consistency. To address this, the database cluster (incomplete graph) at layer i = 2 uses the blockchain core network at i = 1 to order events and ensure eventual consistency. The idea of *eventual* consistency ties in well with the blockchain collapsing to an immutable state after a number of (say 6) blocks (i.e. *eventually).*

This can also be applied to the re-onboarding process for a node that goes off the network temporarily. Other nodes use gossip, or such like, to communicate the state change, and can provide a Merkle proof to prove to that node that the state changes really happened/were requested. The database nodes may be SPV-like here. For re-onboarding, this demonstrates the robust property of BLNs,

The method may operate as follows.

1. A user/client makes a read/write request to a database node. The user/client simultaneously creates and broadcasts a read/write *request transaction* and sends directly to the blockchain core layer. The user/client also sends the *TxID* of this transaction to the coordinator database node.

2. The coordinator behaves as usual by identifying the relevant nodes to which the read/write request pertains. Depending on the request type, the coordinator does the following:

    a. Read request: there is no state mutation required for any node, so the coordinator operator simply forwards the request to the relevant nodes via Gossip or direct communication (if directly connected).
    b. Write request: a state mutation is required for writes, therefore the coordinator must propagate both the request and the data to the relevant replica nodes (via Gossip or direct connection).
    c. In either case, the coordinator also propagates the *TxID* of the write request to the relevant nodes as proof of the ordering of operations.

3. Upon receiving the request and data from the peers, a replica node confirms, from the core, that the request they have received matches the request details in the request transaction, and return an acknowledgement to the coordinator. In embodiments the replica node may only apply the update to its own local record on condition of this check.

4. The coordinator returns:

    a. A success or failure message to the user/client.
    b. Optional: a success or failure transaction to the blockchain core layer for mining.

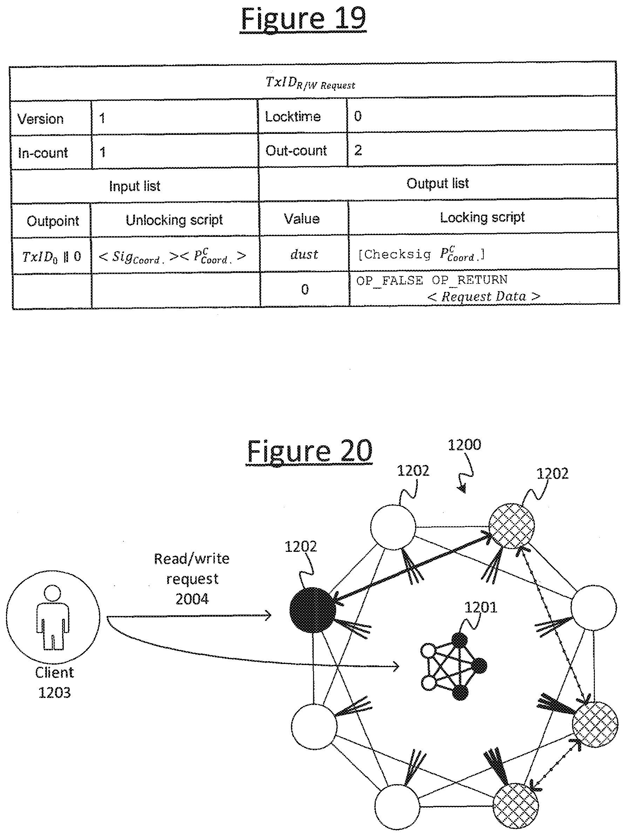

The details of an example read/write transaction are shown in Figure 19 below. The < *request data* > packet may include a unique request ID, the ID of the coordinator node for that request and the key for the row of data that is being requested.

The new read/write path for this method is shown in Figure 20. The main differences from the standard Cassandra read/write path are:

• The user/client submits their read/write request to the database cluster and the blockchain core layer in parallel; and
• The nodes in the database cluster may propagate requests and data using either Gossip (or such like, i.e. indirectly) or direct communication, depending on the distance between a coordinator and the relevant replica nodes for the request.

One advantage is that this reduces the burden on the coordinator to ensure that replica nodes reach the same eventual consistency by repeating the correct order of operations. This is offloaded to the Bitcoin network. Another advantage is that it mitigates the possibility of zombie records, as order of operations (including deletions) that a node misses while offline is stored and recoverable from the blockchain.

**Method** 2 - **Reduce burden on coordinator nodes during hinted handoff.** Conventionally in a distributed database such as Cassandra, if a replica node is unreachable during a write path, a hinted handoff is written to the coordinator node. This places additional burden on the coordinator to help the replica re-join the network by locally storing the hint and forwarding to the re-joining node. The hinted handoff may also timeout, breaking eventual consistency of the data.

To address this using a BLNiDD, hinted handoffs can be written to the blockchain by propagating to them to the blockchain core layer for immutable ordering. When a node re-joins the network, the node can query the blockchain core layer for hints pertaining to it (e.g. using Node ID and/or PKI). Optionally, at least one replica node has written the data for the write request, which the re-joining node can use to obtain the write data blob (rather than storing the blob on the blockchain also).

The method may operate as follows.

1. A user/client makes a write request to a node (coordinator) with a replication factor, e.g. a replication factor of 3.

    a. Optional: the user/client also sends a record of the request to the Bitcoin core layer.

2. The coordinator identifies the 3 nodes to write the data to and forwards the write request.

3. Two of the nodes write the data and respond positively to the request, but the third is unreachable.

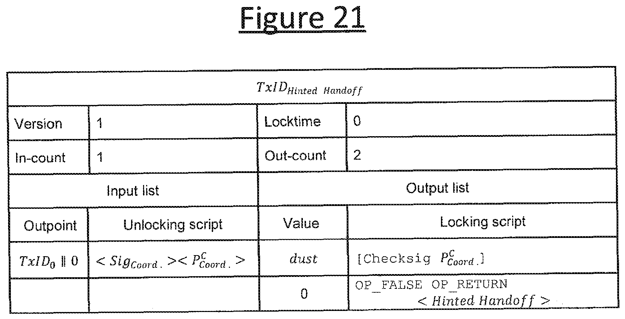

4. The coordinator returns a positive response to the user/client, writes a hinted handoff transaction (see Figure 21) and broadcast it to the blockchain core layer for mining. The hinted handoff comprises:

    a. Node ID of unreachable node, $ID_3$;
    b. Hint ID timestamping the data;
    c. Message ID;
    d. Node IDs of the two replicas the data was successfully written to, $ID_1$, $ID_2$;
    e. A hash of the data blob to be written.
    f. Optional: the data itself

5. The unreachable node re-joins the network and queries its connection in the blockchain core network for incoming hinted handoffs. Upon obtaining the hinted handoff, the node will:

    a. Obtain the data blob from nodes $ID_1$ and/or $ID_2$;

        i. Optional: if the blob is included in the hinted handoff, simply obtain the blob.

    b. Verify that the data blob hashes to the hash in the hinted handoff;
    c. Write the data blob to its local disk, assuming no other operations were missed (which are also identified by their own hinted handoffs).

Figure 21 shows an example of a hinted handoff transaction.

**Method 3** - Improving **security of re-onboarding database nodes.** When a Cassandra node is compromised/partitioned from the rest of the cluster, it needs to be re-onboarded at a later time. This involves obtaining and implementing all local database mutations requested for that node while it was unreachable.

Typically, a Cassandra cluster may be considered a trusted environment, whereby all nodes in the cluster trust each other to propagate and communicate these missed mutation requests. However, it may be desirable to improve the re-joining process for a database node such that it does not require trust in the other nodes to send them the correct missed mutation request.

This may be advantageous in protecting against compromise of many nodes in a distributed database by a sophisticated attacker, who wishes to propagate incorrect mutations from the compromised nodes.

This advantageous reduction in reliance on trust may be achieved by using BLNiDD and using a re-joining protocol (explained below) that requires a re-joining node acquires missed mutation requests from signed transactions obtained from the blockchain core network (confirmed or unconfirmed transactions may be used).

The trustless re-joining protocol may be as follows:

1. A node $ID_1$ is partitioned from a database cluster for a significant period of time. During this time:

    a. Several write requests (including upserts) are made relating to data replicated by $ID_1$.
    b. The node $ID_1$ cannot be certain whether or not it was partitioned due to malicious attack, which means the node must re-join the network assuming other nodes may have been similarly compromised and may be under the control of an attacker.

2. When it re-joins, the re-joining node acquires missed mutation requests from signed transactions obtained from the blockchain core network.

This is similar to method 1, but using the blockchain core network to time-order events that a recently compromised node can query directly to be re-onboarded into the database cluster without trusting the other database nodes to feed them the correct updates.

In some embodiments Merkle proofs may be used for re-onboarding.

An advantage of the above is that it reduces the burden on the coordinator to ensure that replica nodes reach the same eventual consistency by repeating the correct order of operations. This is offloaded to the blockchain network.

**Method** 4 - **Replicating or replacing the commit log of all nodes with transaction** sets. It is a requirement of all nodes in a Cassandra cluster that they must keep a local copy of the commit log of all database mutations they are requested to perform. This places a hardware burden on Cassandra nodes that may limit their performance.

In embodiments disclosed herein, the blockchain can be used as an immutable timestamping ledger to offload the burden of storing the commit log from the database nodes. The commit log needs only to be stored ephemerally on the database nodes themselves, as it can be retrieved as and when required from the blockchain.

This can reduce the burden on all nodes in a database cluster of maintaining their own local commit log, by instead recording them on the blockchain.

In embodiments, the data timestamping method discussed previously may be used to store the entire commit log on the blockchain as a set of linked transactions, whose data and order of operations are both immutably recorded on the blockchain by the action of the blockchain network core layer nodes.

The Cassandra commit log, as detailed previously, is an append-only log of all mutations made to a single Cassandra node. The blockchain log may be similar in that may be an append-only event log of transactions committed to the blockchain.

Other variants or use cases of the disclosed techniques may become apparent to the person skilled in the art once given the disclosure herein. The scope of the disclosure is not limited by the described embodiments but only by the accompanying claims.

**Claims**

1. A method of operating a distributed database implemented in a layered network (1200), the layered network comprising a core layer comprising one or more core nodes (1201, 104M/S), one or more intermediate layers each comprising one or more intermediate layer nodes (1202DB), and one or more outer layers each comprising one or more outer layer nodes (1203C); wherein each of the core nodes is a node of a blockchain network, each node of the blockchain network being one or both of a blockchain storage node arranged to store mined blocks of the blockchain or a mining node configured to mine blocks onto the blockchain, wherein the intermediate layer nodes are neither storage nodes which store mined blocks of the blockchain nor mining nodes which mine blocks onto the blockchain, wherein at least some of the intermediate layer nodes are database nodes of the distributed database, each database node storing at least part of the distributed database, and wherein and at least some of the outer layer nodes are client nodes of the distributed database; the method comprising, at a first one of the database nodes:

   receiving one or more update requests (1401) from one or more of the client nodes, each being a request to update a respective target entry in the distributed database; and
   for each of the received update requests, determining whether the respective target entry is found in the part of the database stored at said first database node, and if so, making the update of the update request to the respective target entry in the part of the database stored at the first database node, and if not, forwarding the request to another of the database nodes which stores a part of the database including the respective target entry;
   wherein at least one transaction including an indication of the one or more update requests is also recorded on a blockchain of the blockchain network; and
   wherein said at least one transaction is formulated and sent to the core layer by at least one of the client nodes or at least one other of the database nodes or other intermediate layer nodes other than the first database node; and the method further comprises, by the first database node:

   inspecting the blockchain to check that the indication of the one or more update requests has been recorded on the blockchain, and/or inspecting a mempool of one or more miners to check that the at least one transaction has been accepted, and wherein said making of the update is conditional on said check.

2. The method of claim 1, wherein each client node has a connection within the layered network to at least one of the database nodes, and the first database node receives at least one of the update requests directly from a client node via one of the connections between client and database nodes, and wherein each of the database nodes has a connection within the layered network to at least one other of the database nodes, and one or both of:

at least one of the update requests is received indirectly via at least one other of the database nodes, other than the first database node, over at least one of the connections between database nodes, and/or
the respective target entry of at least one of the update requests is found in the part of the database stored in one of the other database nodes, and said forwarding comprises forwarding to the other database node via at least one of said connections between database nodes.

3. The method of any preceding claim, wherein said at least one transaction is formulated by at least one of the client nodes, and sent by the at least one client node to the core layer to be mined onto the blockchain.

4. The method of any preceding claims, wherein each client node has a connection within the layered network to at least one of the core nodes, enabling the client nodes to check whether update requests have been recorded to the blockchain.

5. The method of claim 4, wherein said at least one transaction is sent by at least one of the client nodes directly to the core layer via at least one of said connections between client and core nodes.

6. The method of any preceding claim, wherein each of the database nodes has a connection within the layered network to at least one of the core nodes, and wherein each of the database nodes has a connection within the layered network to at least one but not all of the core nodes.

7. The method of any preceding claim, wherein: said one or more update requests are a plurality of update requests, the respective target entries of at least some of the update requests are the same entry in the database found in the part of the database stored at the first database node, and said making of the updates comprises making the updates according to a specified order, wherein the indication of the one or more update requests included in the at least one transaction comprises: the specified order of the plurality of update requests.

8. The method of claim 7, wherein the at least one transaction originates from at least one of the client nodes or at least one other of the database nodes or other intermediate layer nodes other than the first database node, and wherein the method comprises:
the first database node reading the specified order from the blockchain or a mempool of a miner of the blockchain network, wherein said making of the updates comprises making the updates according to said order as determined from the blockchain or mempool.

9. The method of claim 7, wherein the order is determined by: at least one of the client nodes submitting to an ordering service, receiving back a specification of the order from the ordering service, and including the specified order in at least one of the update requests.

10. The method of any preceding claim, wherein one or more entries of the database are replicated across the parts of the database stored on a plurality of the database nodes, and wherein the target entry of at least one of the update requests is found in both the part of the database stored on the first database node and another of the database nodes, such that the method comprises both making the update at the first database node and forwarding the request to the other database node.

11. The method of any preceding claim, wherein for a period the first database node become temporarily disconnected from the layered network, and the method further comprises, when the first database nodes becomes reconnected to the layered network:
the first node inspecting the blockchain, or a mempool of a miner of the blockchain network, to check for one or more further transactions recording any update request received by one or more other database nodes, while the first database node was disconnected, relating to a respective target entry in a part of the database stored by said first database node, and making any such update.

12. Computer equipment comprising:

memory comprising one or more memory units,

processing apparatus comprising one or more processing units, and
a network interface comprising one or more network interface units;
wherein the memory stores code arranged to run on the processing apparatus, the code being configured so as when run on the processing apparatus to operate the computer equipment as said first database node by performing the method of any preceding claim, including receiving the update requests via the network interface.

13. A computer program embodied on computer readable storage and configured so as when run on one or more processors to perform the method of any of claims 1 to 11.

**Patentansprüche**

1. Verfahren zum Betreiben einer verteilten Datenbank, die in einem geschichteten Netzwerk (1200) implementiert ist, wobei das geschichteten Netzwerk eine Kernschicht, die einen oder mehrere Kernknoten (1201, 104M/S) umfasst, eine oder mehrere Zwischenschichten, die jeweils einen oder mehrere Zwischenschichtknoten (1202DB) umfassen, und eine oder mehrere Außenschichten, die jeweils einen oder mehrere Außenschichtknoten (1203C) umfassen, umfasst; wobei jeder der Kernknoten ein Knoten eines Blockchain-Netzwerks ist, wobei jeder Knoten des Blockchain-Netzwerks eines von einem Blockchain-Speicherknoten, der dazu eingerichtet ist, geschürfte Blöcke der Blockchain zu speichern, oder einem Mining-Knoten, der dafür ausgelegt ist, Blöcke an die Blockchain anzufügen, oder beides ist, wobei die Zwischenschichtknoten weder Speicherknoten, welche geschürfte Blöcke der Blockchain speichern, noch Mining-Knoten, welche Blöcke an die Blockchain anfügen, sind, wobei wenigstens einige der Zwischenschichtknoten Datenbankknoten der verteilten Datenbank sind, wobei jeder Datenbankknoten wenigstens einen Teil der verteilten Datenbank speichert, und wobei wenigstens einige der Außenschichtknoten Client-Knoten der verteilten Datenbank sind; wobei das Verfahren umfasst, an einem ersten der Datenbankknoten:

   Empfangen einer oder mehrerer Aktualisierungsanforderungen (1401) von einem oder mehreren der Client-Knoten, wobei jede eine Anforderung ist, einen jeweiligen Zieleintrag in der verteilten Datenbank zu aktualisieren; und
   für jede der empfangenen Aktualisierungsanforderungen, Bestimmen, ob der jeweilige Zieleintrag in dem Teil der Datenbank gefunden wird, der an dem ersten Datenbankknoten gespeichert ist, und falls dies zutrifft, Durchführen der Aktualisierung der Aktualisierungsanforderung für den jeweiligen Zieleintrag in dem Teil der Datenbank, der an dem ersten Datenbankknoten gespeichert ist, und falls nicht, Weiterleiten der Anforderung an einen anderen der Datenbankknoten, welcher einen Teil der Datenbank speichert, der den jeweiligen Zieleintrag enthält;
   wobei wenigstens eine Transaktion, die eine Angabe der einen oder mehreren Aktualisierungsanforderungen enthält, auch auf einer Blockchain des Blockchain-Netzwerks aufgezeichnet wird; und
   wobei diese wenigstens eine Transaktion von wenigstens einem der Client-Knoten oder wenigstens einem anderen der Datenbankknoten oder anderen Zwischenschichtknoten, die von dem ersten Datenbankknoten verschieden sind, formuliert und an die Kernschicht gesendet wird; und wobei das Verfahren ferner umfasst, durch den ersten Datenbankknoten:
   Inspizieren der Blockchain, um zu prüfen, ob die Angabe der einen oder mehreren Aktualisierungsanforderungen auf der Blockchain aufgezeichnet worden ist, und/oder Inspizieren eines Mempools eines oder mehrerer Miner, um zu prüfen, ob die wenigstens eine Transaktion akzeptiert worden ist, und wobei das Durchführen der Aktualisierung von dieser Prüfung abhängt.

2. Verfahren nach Anspruch 1, wobei jeder Client-Knoten eine Verbindung innerhalb des geschichteten Netzwerks zu wenigstens einem der Datenbankknoten aufweist und der erste Datenbankknoten wenigstens eine der Aktualisierungsanforderungen direkt von einem Client-Knoten über eine der Verbindungen zwischen Client und Datenbankknoten empfängt, und wobei jeder der Datenbankknoten eine Verbindung innerhalb des geschichteten Netzwerks zu wenigstens einem anderen der Datenbankknoten aufweist, und wobei wenigstens eines von Folgendem zutrifft: wenigstens eine der Aktualisierungsanforderungen wird indirekt über wenigstens einen anderen der Datenbankknoten, der von dem ersten Datenbankknoten verschieden ist, über wenigstens eine der Verbindungen zwischen Datenbankknoten empfangen, und/oder der jeweilige Zieleintrag wenigstens einer der Aktualisierungsanforderungen wird in dem Teil der Datenbank gefunden, der in einem der anderen Datenbankknoten gespeichert ist, und das Weiterleiten umfasst das Weiterleiten an den anderen Datenbankknoten über wenigstens eine der Verbindungen zwischen Datenbankknoten.

3. Verfahren nach einem der vorhergehenden Ansprüche, wobei die wenigstens eine Transaktion von wenigstens einem der Client-Knoten formuliert wird und von dem wenigstens einen Client-Knoten an die Kernschicht gesendet wird, um an die Blockchain angefügt zu werden.

4. Verfahren nach einem der vorhergehenden Ansprüche, wobei jeder Client-Knoten eine Verbindung innerhalb des geschichteten Netzwerks zu wenigstens einem der Kernknoten aufweist, die den Client-Knoten ermöglicht zu prüfen, ob Aktualisierungsanforderungen auf der Blockchain aufgezeichnet worden sind.

5. Verfahren nach Anspruch 4, wobei die wenigstens eine Transaktion von wenigstens einem der Client-Knoten über wenigstens eine der Verbindungen zwischen Client- und Kernknoten direkt an die Kernschicht gesendet wird.

6. Verfahren nach einem der vorhergehenden Ansprüche, wobei jeder der Datenbankknoten eine Verbindung innerhalb des geschichteten Netzwerks zu wenigstens einem der Kernknoten aufweist und wobei jeder der Datenbankknoten eine Verbindung innerhalb des geschichteten Netzwerks zu wenigstens einem, jedoch nicht allen Kernknoten aufweist.

7. Verfahren nach einem der vorhergehenden Ansprüche, wobei: die eine oder mehreren Aktualisierungsanforderungen mehrere Aktualisierungsanforderungen sind, die jeweiligen Zieleinträge wenigstens einiger der Aktualisierungsanforderungen derselbe Eintrag in der Datenbank sind, der in dem am ersten Datenbankknoten gespeicherten Teil der Datenbank gefunden wird, und das Durchführen der Aktualisierungen das Durchführen der Aktualisierungen gemäß einer festgelegten Reihenfolge umfasst, wobei die Angabe der einen oder mehreren Aktualisierungsanforderungen, die in der wenigstens einen Transaktion enthalten ist, umfasst: die festgelegte Reihenfolge der mehreren Aktualisierungsanforderungen.

8. Verfahren nach Anspruch 7, wobei die wenigstens eine Transaktion von wenigstens einem der Client-Knoten oder wenigstens einem anderen der Datenbankknoten oder anderen Zwischenschichtknoten, die von dem ersten Datenbankknoten verschieden sind, stammt und wobei das Verfahren umfasst, dass:
der erste Datenbankknoten die festgelegte Reihenfolge aus der Blockchain oder einem Mempool eines Miners des Blockchain-Netzwerks liest, wobei das Durchführen der Aktualisierungen das Durchführen der Aktualisierungen gemäß der Reihenfolge umfasst, die aus der Blockchain oder dem Mempool bestimmt wurde.

9. Verfahren nach Anspruch 7, wobei die Reihenfolge dadurch bestimmt wird, dass: wenigstens einer der Client-Knoten einen Ordering-Service in Anspruch nimmt, eine Festlegung der Reihenfolge von dem Ordering-Service zurückerhält und die festgelegte Reihenfolge in wenigstens einer der Aktualisierungsanforderungen einfügt.

10. Verfahren nach einem der vorhergehenden Ansprüche, wobei ein oder mehrere Einträge der Datenbank über die Teile der Datenbank repliziert werden, die auf mehreren der Datenbankknoten gespeichert sind, und wobei der Zieleintrag wenigstens einer der Aktualisierungsanforderungen sowohl in dem Teil der Datenbank, der auf dem ersten Datenbankknoten gespeichert ist, als auch auf einem anderen der Datenbankknoten gefunden wird, so dass das Verfahren sowohl das Durchführen der Aktualisierung an dem ersten Datenbankknoten als auch das Weiterleiten der Anforderung an den anderen Datenbankknoten umfasst.

11. Verfahren nach einem der vorhergehenden Ansprüche, wobei für einen Zeitabschnitt der erste Datenbankknoten vorübergehend von dem geschichteten Netzwerk getrennt wird und das Verfahren ferner umfasst, wenn der erste Datenbankknoten wieder mit dem geschichteten Netzwerk verbunden wird, dass:
der erste Knoten die Blockchain oder einen Mempool eines Miners des Blockchain-Netzwerks inspiziert, um nach einer oder mehreren weiteren Transaktionen zu suchen, die irgendeine Aktualisierungsanforderung aufzeichnen, die durch einen oder mehrere andere Datenbankknoten empfangen wurde, während der erste Datenbankknoten getrennt war, und sich auf einen jeweiligen Zieleintrag in einem von dem ersten Datenbankknoten gespeicherten Teil der Datenbank bezieht, und eine etwaige solche Aktualisierung durchführt.

12. Computereinrichtung, umfassend:

einen Speicher, der eine oder mehrere Speichereinheiten umfasst,
eine Verarbeitungsvorrichtung, die eine oder mehrere Verarbeitungseinheiten umfasst, und
eine Netzwerkschnittstelle, die eine oder mehrere Netzwerkschnittstelleneinheiten umfasst;
wobei der Speicher Code speichert, der dazu eingerichtet ist, auf der Verarbeitungsvorrichtung ausgeführt zu werden, wobei der Code dafür ausgelegt ist, wenn er auf der Verarbeitungsvorrichtung ausgeführt wird, die Computereinrichtung durch Durchführen des Verfahrens nach einem der vorhergehenden Ansprüche als den ersten Datenbankknoten zu betreiben, einschließlich des Empfangens der Aktualisierungsanforderungen über die Netzwerkschnittstelle.

**13.** Computerprogramm, das auf einer computerlesbaren Speicher verkörpert und dazu ausgelegt ist, das Verfahren nach einem der Ansprüche 1 bis 11 durchzuführen, wenn es auf einem oder mehreren Prozessor(en) ausgeführt wird.

## Revendications

**1.** Procédé de fonctionnement d'une base de données distribuée mise en œuvre dans un réseau en couches (1200), le réseau en couches comprenant une couche centrale comprenant un ou plusieurs nœuds centraux (1201, 104M/S), une ou plusieurs couches intermédiaires comprenant chacune un ou plusieurs nœuds de couche intermédiaire (1202DB) et une ou plusieurs couches externes comprenant chacune un ou plusieurs nœuds de couche externe (1203C) ; chacun des nœuds centraux étant un nœud d'un réseau à chaîne de blocs, chaque nœud du réseau à chaîne de blocs étant l'un ou les deux parmi un nœud de stockage à chaîne de blocs agencé pour stocker des blocs extraits de la chaîne de blocs ou un nœud d'extraction configuré pour extraire des blocs sur la chaîne de blocs, les nœuds de couche intermédiaire n'étant ni des nœuds de stockage qui stockent des blocs extraits de la chaîne de blocs, ni des nœuds d'extraction qui extraient des blocs sur la chaîne de blocs, au moins certains des nœuds de couche intermédiaire étant des nœuds de base de données de la base de données distribuée, chaque nœud de base de données stockant au moins une partie de la base de données distribuée, et au moins certains des nœuds de couche externe étant des nœuds clients de la base de données distribuée. Le procédé comprend, au niveau d'un premier parmi les nœuds de base de données :

la réception d'une ou de plusieurs demandes de mise à jour (1401) provenant d'un ou plusieurs des nœuds clients, chacune étant une demande de mise à jour d'une entrée cible respective dans la base de données distribuée ; et
pour chacune des demandes de mise à jour reçues, déterminer si l'entrée cible respective est trouvée dans la partie de la base de données stockée au niveau dudit premier nœud de base de données et, si tel est le cas, effectuer la mise à jour de la demande de mise à jour à l'entrée cible respective dans la partie de la base de données stockée au niveau du premier nœud de base de données et, dans le cas contraire, transmettre la demande à un autre des nœuds de base de données qui stocke une partie de la base de données comprenant l'entrée cible respective ;
dans lequel au moins une transaction comprenant une indication de la ou des demandes de mise à jour est aussi enregistrée sur une chaîne de blocs du réseau de chaînes de blocs ; et
dans lequel ladite au moins une transaction est formulée et envoyée à la couche centrale par au moins un des nœuds clients ou au moins un autre des nœuds de base de données ou d'autres nœuds de couche intermédiaire autres que le premier nœud de base de données ; et le procédé comprend en outre, par le premier nœud de base de données :
l'inspection de la chaîne de blocs pour vérifier que l'indication de la ou des demandes de mise à jour a été enregistrée sur la chaîne de blocs, et/ou l'inspection d'un groupe de mémoires d'un ou de plusieurs mineurs pour vérifier que la ou les transactions ont été acceptées, et ladite réalisation de la mise à jour étant conditionnelle à ladite vérification.

**2.** Procédé selon la revendication 1, dans lequel chaque nœud client a une connexion à l'intérieur du réseau en couches avec au moins un des nœuds de base de données, et le premier nœud de base de données reçoit au moins une des demandes de mise à jour directement à partir d'un nœud client par l'intermédiaire d'une des connexions entre les nœuds clients et de base de données, et chacun des nœuds de base de données ayant une connexion à l'intérieur du réseau en couches avec au moins un autre des nœuds de base de données, et l'un ou les deux parmi :

au moins une des demandes de mise à jour est reçue indirectement par l'intermédiaire d'au moins un autre des nœuds de base de données, autre que le premier nœud de base de données, sur au moins une des connexions entre des nœuds de base de données, et/ou
l'entrée cible respective d'au moins une des demandes de mise à jour est trouvée dans la partie de la base de données stockée dans l'un des autres nœuds de base de données, et ledit transfert comprend le transfert vers l'autre nœud de base de données par l'intermédiaire d'au moins une desdites connexions entre des nœuds de base de données.

**3.** Procédé selon l'une quelconque des revendications précédentes, dans lequel ladite au moins une transaction est formulée par au moins un des nœuds clients, et envoyée par le ou les nœuds clients à la couche centrale pour être extraite sur la chaîne de blocs.

4. Procédé selon l'une quelconque des revendications précédentes, dans lequel chaque nœud client a une connexion à l'intérieur du réseau en couches avec au moins l'un des nœuds centraux, permettant aux nœuds clients de vérifier si des demandes de mise à jour ont été enregistrées dans la chaîne de blocs.

5. Procédé selon la revendication 4, dans lequel ladite au moins une transaction est envoyée par au moins un des nœuds clients directement à la couche centrale par l'intermédiaire d'au moins une desdites connexions entre les nœuds clients et centraux.

6. Procédé selon l'une quelconque des revendications précédentes, dans lequel chacun des nœuds de base de données a une connexion à l'intérieur du réseau en couches avec au moins l'un des nœuds centraux, et chacun des nœuds de base de données ayant une connexion à l'intérieur du réseau en couches avec au moins un des nœuds centraux, mais pas tous.

7. Procédé selon l'une quelconque des revendications précédentes, dans lequel : lesdites une ou plusieurs demandes de mise à jour sont une pluralité de demandes de mise à jour, les entrées cibles respectives d'au moins certaines des demandes de mise à jour étant la même entrée dans la base de données trouvée dans la partie de la base de données stockée au niveau du premier nœud de base de données, et ladite réalisation des mises à jour consiste à effectuer les mises à jour selon un ordre spécifié, l'indication de la ou des demandes de mise à jour comprises dans la ou les transactions comprenant : l'ordre spécifié de la pluralité de demandes de mise à jour.

8. Procédé selon la revendication 7, dans lequel la ou les transactions proviennent d'au moins un des nœuds clients ou d'au moins un autre des nœuds de base de données ou d'autres nœuds de couche intermédiaire autres que le premier nœud de base de données, et le procédé comprenant :
le premier nœud de base de données lisant l'ordre spécifié à partir de la chaîne de blocs ou d'un groupe de mémoires d'un mineur du réseau à chaîne de blocs, ladite réalisation des mises à jour comprenant la réalisation des mises à jour selon ledit ordre tel que déterminé à partir de la chaîne de blocs ou du groupe de mémoires.

9. Procédé selon la revendication 7, dans lequel l'ordre est déterminé par : au moins l'un des nœuds clients soumettant à un service de commande, recevant en retour une spécification de l'ordre du service de commande, et incluant l'ordre spécifié dans au moins l'une des demandes de mise à jour.

10. Procédé selon l'une quelconque des revendications précédentes, dans lequel une ou plusieurs entrées de la base de données sont répliquées entre les parties de la base de données stockées sur une pluralité de nœuds de base de données, et l'entrée cible d'au moins une des demandes de mise à jour se trouve à la fois dans la partie de la base de données stockée sur le premier nœud de base de données et dans un autre des nœuds de base de données, de sorte que le procédé consiste à la fois à effectuer la mise à jour au niveau du premier nœud de base de données et à transmettre la demande à l'autre nœud de base de données.

11. Procédé selon l'une quelconque des revendications précédentes, dans lequel, pendant une période, le premier nœud de base de données devient temporairement déconnecté du réseau en couches, et le procédé comprend en outre, lorsque les premiers nœuds de base de données sont reconnectés au réseau en couches :
le premier nœud inspecte la chaîne de blocs, ou un groupe de mémoires d'un mineur du réseau de chaînes de blocs, pour vérifier la présence d'une ou plusieurs transactions supplémentaires enregistrant toute demande de mise à jour reçue par un ou plusieurs autres nœuds de base de données, tandis que le premier nœud de base de données était déconnecté, en relation avec une entrée cible respective dans une partie de la base de données stockée par ledit premier nœud de base de données, et effectuant une telle mise à jour.

12. Équipement informatique comprenant :

une mémoire comprenant une ou plusieurs unités de mémoire,
un appareil de traitement comprenant une ou plusieurs unités de traitement, et
une interface réseau comprenant une ou plusieurs unités d'interfaces réseau ;
dans lequel la mémoire stocke un code agencé pour s'exécuter sur l'appareil de traitement, le code étant configuré de manière à, lorsqu'il est exécuté sur l'appareil de traitement, faire fonctionner l'équipement informatique en tant que ledit premier nœud de base de données en exécutant le procédé selon l'une quelconque des revendications précédentes, comprenant la réception des demandes de mise à jour par l'intermédiaire de l'interface réseau.

13. Programme informatique incorporé sur un stockage lisible par ordinateur et configuré de façon à réaliser, lorsqu'il est exécuté sur un ou plusieurs processeurs, le procédé selon l'une quelconque des revendications 1 à 11.

# Figure 1

# Figure 2

152i

202    $Tx_0$    201

**$TxID_0$**

| Input(s) | Output(s) |
|---|---|
| **Input** | **$UTXO_0$** |
| • Pointer to previous $Tx$ <br> • Index of UTXO in previous $Tx$ <br> • Unlocking script for unlocking from previous party | • Amount <br> • Locking script locking to Alice |
| ⋮ <br> Optional further inputs <br> ⋮ | ⋮ <br> Optional further $UTXO$s <br> ⋮ |

152j

$Tx_1$    201    203

**$TxID_1$**

| Input(s) | Output(s) |
|---|---|
| **Input** | **$UTXO_1$** |
| • Pointer to $Tx_0$ <br> • Index of $UTXO_0$ [within $Tx_0$] <br> • Unlocking script for unlocking $UTXO_0$ from Alice | • Amount <br> • Locking script locking to Bob |
| ⋮ <br> Optional further inputs <br> ⋮ | ⋮ <br> Optional further $UTXO$s <br> ⋮ |

203

202

Transaction from Alice to Bob

↓

Validated by running: Alice's locking script (from output of $Tx_0$), together with Alice's unlocking script (as input to $Tx_1$). This checks that Bob's unlocking script in $Tx_1$ meets the condition(s) defined in Alice's locking script in $Tx_0$.

# Figure 3

| Connection Key | |
|---|---|
| —————— | Intra-layer |
| — — — — | Ancestor |
| ·············· | Core ancestor |

# Figure 4

400

303

303

302

301

303

301

303

302

303

302

301

302

303

303

303

| Connection Key | |
|---|---|
| ———— | Intra-layer |
| – – – – | Ancestor |
| ············· | Core ancestor |

# Figure 5

# Figure 6

## Figure 7

$152 / Tx_1$

# Figure 8

| TxID$_1$ | | | |
|---|---|---|---|
| Version | 1 | Locktime | 0 |
| In-count | 1 | Out-count | 2 |
| Input list | | Output list | |
| Outpoint | Unlocking script | Value | Locking script |
| $TxID_0 \parallel 0$ | $< Sig_1 >< P_1 >$ | $dust$ | [Checksig $P_2$] |
| | | 0 | OP_FALSE OP_RETURN $< data_1 >$ |

202                        203

# Figure 9

| Index | Data | Hash chain element |
|---|---|---|
| 1 | $D_1$ | $H_1 = H(D_1)$ |
| 2 | $D_2$ | $H_2 = H(D_2 \parallel H_1)$ |
| 3 | $D_3$ | $H_3 = H(D_3 \parallel H_2)$ |
| | | $\vdots$ |
| $n_1$ | $D_{n_1}$ | $H_{n_1} = H\left(D_{n_1} \parallel H_{n_1-1}\right)$ |

## Figure 10

| Index | Data | Public key | Signature |
|---|---|---|---|
| 1 | $D_1$ | $P_{11} = P_1 + H(D_1) \cdot G$ | Sig $(P_{11}, H(D_1))$ |
| 2 | $D_2$ | $P_{12} = P_1 + H(D_2 \| P_{11}) \cdot G$ | Sig $(P_{12}, H(D_2))$ |
| 3 | $D_3$ | $P_{13} = P_1 + H(D_3 \| P_{12}) \cdot G$ | Sig $(P_{13}, H(D_3))$ |
| | | $\vdots$ | |
| $n_1$ | $D_{n_1}$ | $P_{1n_1} = P_1 + H(D_{n_1} \| P_{1(n_1-1)}) \cdot G$ | Sig $(P_{1n_1}, H(D_{n_1}))$ |

## Figure 11

| Index | Data | Ephemeral key | Signature |
|---|---|---|---|
| 1 | $D_1$ | $R_{11} = R_1 + H(D_1) \cdot G$ | $< S_1, R_{11} >(H(D_1))$ |
| 2 | $D_2$ | $R_{12} = R_1 + H(D_2 \| R_{11}) \cdot G$ | $< S_1, R_{12} >(H(D_2))$ |
| 3 | $D_3$ | $R_{13} = R_1 + H(D_3 \| R_{12}) \cdot G$ | $< S_1, R_{13} >(H(D_3))$ |
| | | $\vdots$ | |
| $n_1$ | $D_{n_1}$ | $R_{1n_1} = R_1 + H(D_{n_1} \| R_{1(n_1-1)}) \cdot G$ | $< S_1, R_{1n_1} >(H(D_{n_1}))$ |

## Figure 12

# Figure 13

**(a)**

Connections between
Cassandra Nodes
1399

Cassandra Node
Cluster
1300

Cassandra
Nodes
1301

**(b)**

1301

1399

| Key: | | |
|---|---|---|
| Data Partition 1 (1351) | | |
| Data Partition 2 (1352) | | |
| Data Partition 3 (1353) | | |

Cassandra Node
Cluster
1300

# Figure 14

1300

Read/write
request
1404

Client
1403

| Key: |
| --- |
| ⊗    Replica Node 1301r |
| ●    Coordinator Node 1301c |
| ⟷    Read/write interaction 1401 |
| ⟨·⟩    Gossip interaction 1402 |

# Figure 15

# Figure 16

Cassandra
Node Cluster
(Complete
Graph)

BLN Cassandra Node Cluster
(Incomplete Graph [i = 2], coordinated by
mining core [i = 1])

# Figure 17

| | Key | | | | |
|---|---|---|---|---|---|
| ◯ | Blockchain network core node 1201/104 | Ⓒ | Database node 1202 | 👤 | User/client node 1203 |

# Figure 18

| Key | | | | | |
|---|---|---|---|---|---|
| ◯ | Blockchain core node 1201/104 | $P^C_i$ | Database node 1202 | $P^U_i$ | User/client node 1203 |

## Figure 19

| $TxID_{R/W\ Request}$ | | | |
|---|---|---|---|
| Version | 1 | Locktime | 0 |
| In-count | 1 | Out-count | 2 |
| Input list | | Output list | |
| Outpoint | Unlocking script | Value | Locking script |
| $TxID_0 \parallel 0$ | $< Sig_{Coord.} >< P^C_{Coord.} >$ | $dust$ | [Checksig $P^C_{Coord.}$] |
| | | 0 | OP_FALSE OP_RETURN<br>$< Request\ Data >$ |

## Figure 20

# Figure 21

| $TxID_{Hinted\ Handoff}$ | | | |
|---|---|---|---|
| Version | 1 | Locktime | 0 |
| In-count | 1 | Out-count | 2 |
| Input list | | Output list | |
| Outpoint | Unlocking script | Value | Locking script |
| $TxID_0 \parallel 0$ | $< Sig_{Coord.} >< P^C_{Coord.} >$ | $dust$ | [Checksig $P^C_{Coord.}$] |
| | | 0 | OP_FALSE OP_RETURN<br>$< Hinted\ Handoff >$ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020004737 A1

- US 2009089313 A

**Non-patent literature cited in the description**

- **ANIELLO et al.** *A Prototype Evaluation of a Tamper-resistant High Performance Blockchain-based Transaction Log for a Distributed Database*

- **GARCIA-MOLINA et al.** *Reliable distributed Database Management*